(19) 

Europäisches
Patentamt
European
Patent Office
Office européen
des brevets

(11) **EP 3 457 603 A1**

(12) **EUROPEAN PATENT APPLICATION**
published in accordance with Art. 153(4) EPC

(43) Date of publication:
**20.03.2019 Bulletin 2019/12**

(21) Application number: **17795611.7**

(22) Date of filing: **12.05.2017**

(51) Int Cl.:
**H04L 1/00** *(2006.01)*     **H04L 5/00** *(2006.01)*

(86) International application number:
**PCT/CN2017/084105**

(87) International publication number:
**WO 2017/193993 (16.11.2017 Gazette 2017/46)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **13.05.2016 CN 201610319549**

(71) Applicant: **ZTE Corporation**
**Shenzhen, Guangdong 518057 (CN)**

(72) Inventors:
• **YAN, Xiao**
 **Shenzhen**
 **Guangdong 518057 (CN)**

• **LI, Yu Ngok**
 **Shenzhen**
 **Guangdong 518057 (CN)**
• **CHEN, Yijian**
 **Shenzhen**
 **Guangdong 518057 (CN)**
• **LI, Jian**
 **Shenzhen**
 **Guangdong 518057 (CN)**
• **HAO, Peng**
 **Shenzhen**
 **Guangdong 518057 (CN)**

(74) Representative: **Regimbeau**
 **20, rue de Chazelles**
 **75847 Paris Cedex 17 (FR)**

(54) **METHOD AND DEVICE FOR FEEDING CHANNEL STATE INFORMATION BACK**

(57)     Provided are a method and device for feeding channel state information back. A terminal performs measurement on one or more groups of measurement resources according to signaling transmitted from a base station and/or its own assumption to obtain a measurement result corresponding to each group of measurement resources. The terminal calculates, according to the signaling and/or its own assumption and the measurement results, CSI on DMRS ports and/or DMRS port groups corresponding to each group of measurement resources. The terminal feeds part of or all calculated CSI back to the base station. Accordingly, the problem in the related art that in the process of using a CoMP technology to reduce interference of cell-edge users by a coordination of multiple adjacent base stations or points, the CSI fed back by the terminal has a low accuracy and a poor flexibility is solved, implementing technical effects of improving the accuracy and flexibility of the CSI fed back by the terminal.

A terminal performs measurement, according to signaling transmitted from a base station and/or its own assumption, on one or more groups of measurement resources, and obtains a measurement result corresponding to each group of measurement resources.     S12

The terminal calculates, according to the measurement result, and the signaling and/or its own assumption, channel state information (CSI) on DMRS ports and/or DMRS port groups corresponding to each group of measurement resources.     S14

The terminal feeds back part of or all calculated CSI to the base station     S16

FIG. 1

Description

**TECHNICAL FIELD**

The present invention relates to the wireless communication field and, in particular, to a method and device for feeding channel state information back.

**BACKGROUND**

Wireless channels are usually in constant change. In order to adapt channel changes, in a long term evolution (LTE) system, a user equipment (UE) may report downlink channel quality information to a base station by downlink physical channel state information (CSI) so that the base station selects an appropriate modulation and code scheme (MCS) for the UE. Selecting the MCS according to the CSI not only can fully use transmission ability of the channel, but also can ensure that a block error rate (BLER) of the UE and the retransmission overhead are kept at a reasonable level. Feedback contents reflecting the downlink physical CSI in the LTE include the following three items:

(1) a channels quality indication (CQI);

(2) a pre-coding matrix indicator (PMI);

(3) a rank indicator (RI).

The RI is used for indicating channel matrix rank, that is, the number of data layers that can be transmitted in parallel. The PMI is used for providing a recommendation on transmitting a pre-coding for the UE. The CQI is a signal to interference plus noise ratio (SINR) level estimation of the UE when performing transmission according to the fed back RI and PMI, and is responsible for assisting the base station to determine the MCS. Contents of the CSI feedback usually are measured and calculated on a certain reference signals (RS). The RSs may include, but is not limited to at least one of the following:

(1) a cell specific reference signal (CRS)

(2) a channel state information reference signal (CSI-RS); and

(3) an interference measurement resource (IMR).

The LTE adopts an orthogonal frequency division multiplexing (OFDM) technology in a cell. User signals in the cell are orthogonal, so the interference may be well controlled. A frequency multiplexing factor of adjacent cells is 1, that is, adjacent cells usually use a same frequency. Therefore, the interference among cells is very serious. Even the serious interference among the cells causes a poor cell-edge performance, which is an important problem to be solved in the LTE system.

To improve the performance of cell-edge users, a coordinated multi-point (CoMP) transmission technology is introduced in the LTE system. The CoMP transmission technology reduces the interference of the cell-edge users by a coordination of multiple adjacent base stations or points, thereby improving its service quality. The CoMP transmission technology is mainly divided into three types described below.

(1). A joint transmission (JT);

In the JT, when multiple coordinated cells jointly provide a signal transmission for a target user on the same time-frequency resource, for a terminal, an interference signal becomes a useful signal, thereby greatly improving the reception quality of the signal. Furthermore, the JT may be divided into a coherent JT and non-coherent JT. The coherent JT needs a phase difference between different transmission points (TP) fed back by the UE to ensure that signals of different TP may be added in the same phase at the UE. Baseband data of the transmission needs to be contributed at different TPs to achieve a joint encoding. Due to high requirements for feedback and backhaul as well as limited performance gains of the coherent JT, the coherent JT is not supported by the current protocol. In the non-coherent JT, different TPs may transmit independent data to the UE without the joint encoding, which is more practical due to its lower requirements for backhaul.

(2). a dynamic point selection/dynamic point blanking (DPS/DPB); and

(3). a coordinated scheduling coordinated beamforming (CSCB);

The DPS may serve by dynamically selecting a cell with the best channel condition to optimize the service quality of users, while the CSCB and DPB may suppress the interference to the target user by scheduling the coordinated cells or controlling the transmission.

In the 5G mobile communication technology, densely deployed transport points for meeting a growing traffic demand will become a general trend. A distance between TPs is only dozens of meters or even more than 10 meters. The intensive transmission points may provide high splitting gains to meet capacity demands of hot spots such as downtown areas and office areas, which, however brings a more serious interference problem. Therefore, the CoMP technology becomes more necessary. Meanwhile, densely deployed transport points also introduces new scenarios for the CoMP technology. The number of TPs in an intensive network is large, and the cost of a single TP is certainty reduced. So, the simple structure and small antenna quantity will become a changing trend for TPs. In addition, the distance between the TP and the UE is small. A signal propagation path may be a direct path. It is usually difficult to transmit multiple data streams at the same time to the UE in an environment which is not multi-path rich. With the development of the UE, equipping multiple antennas becomes a trend and the antenna freedom of the UE has not been fully utilized. In this case, with the JT, two TPs may each transmit a part of the data stream for the UE, thereby implementing a multi-layer transmission. Meanwhile, the DPS/DPB and CS/CB in the intensive network also require a more flexible interference measurement to support these technologies.

The current protocol regulates that for a first transmission, a CQI based on single codeword mode is fed back when RI=1, and one or two CQIs in dual codeword mode is fed back when RI>1, and the UE supports a dual codeword transmission at the same time at most. Such regulation does not support that multiple TPs simultaneously and independently transmit codewords to the UE when RI>1. Also, a CQI calculation in the CSI is usually based on a channel measured on a certain RS and interference measured in a certain manner. In the non-coherent JT, interlayer (intercodeword) interference exist in the transmissions of different TPs, but sthe UE may cancel the interference by adopting advanced technologies such as a sequential interference cancellation (SIC). For example, when the two TPs coordinately serve as the non-coherent TPs, the UE may detect the signal of the TP with better signal quality and minus it from the signal, so that a signal-to-noise ratio of another TP is improved, which requires adopting different CQI calculation methods for the signal corresponding to different TPs, but is not supported by the current protocol. Meanwhile, in the DPS and CSCB, the TP is able to know a mutual interference relationship between adjacent TPs according to prior knowledge. The TP may configure the UE to consider these interference relationships when performing a CSI measurement in order to report a more accurate CSI to improve performance or provide a reference for the interference avoidance. But the current protocol has limited support in this regard.

## SUMMARY

Embodiments of the present invention provide a method and device for feeding back channel state information so as to at least solve the problem in the related art that in the process of using a CoMP technology to reduce interference of cell-edge users by a coordination of multiple adjacent base stations or points, the CSI fed back by the terminal has a low accuracy and a poor flexibility.

A method for feeding channel state information back is provided according to an embodiment of the present invention. The method includes: a terminal performing measurement on one or more groups of measurement resources according to signaling transmitted from a base station and/or an assumption of the terminal, and obtaining a measurement result corresponding to each group of measurement resources; the terminal calculating, according to the signaling and/or the assumption of the terminal and the measurement result, channel state information (CSI) on each group of measurement resources corresponding to demodulation reference signal (DMRS) ports and/or DMRS port groups; and the terminal feeding part of or all calculated CSI back to the base station.

Alternatively, the CSI corresponding to each group of measurement resources includes at least one of the following: a channels quality indication (CQI); a rank indicator (RI); a pre-coding matrix indicator (PMI); and a channel state information reference signal index (CRI).

Alternatively, measurement resource types in each group of measurements resources include one or more of the following: a cell specific reference signal (CRS); a channel state information reference signal (CSI-RS); and an interference measurement resource.

Alternatively, each group of measurements resources includes a signal part and interference part. The signal part includes a set of signal CSI-RS resources. The interference part includes a set of IMR resources and an interference CSI-RS resource set.

Alternatively, the interference CSI-RS resource set is empty, or the interference CSI-RS resource set includes one set of interference CSI-RS resources, or the interference CSI-RS resource set includes multiple sets of interference CSI-RS resources.

Alternatively, in the each group of measurement resources, the set of signal CSI-RS resources and each set of interference CSI-RS resources correspond to same DMRS ports or same DMRS port groups. Alternatively, in the each group of measurement resources, each set of signal CSI-RS resources and each set of interference CSI-RS resources respectively correspond to different DMRS ports or different DMRS port groups.

Alternatively, in each group of measurement resources, one set of signal CSI-RS resources and one or more sets of interference CSI-RS resources in the interference CSI-RS resource set belong to a same CSI Process or belong to different CSI Processes.

Alternatively, a correspondence between signal CSI-RS resources in each group of measurement resources and the DMRS ports or DMRS port groups means that channel properties experienced by signals transmitted on the signal CSI-RS resources is same as channel properties experienced by signals transmitted via the DMRS ports or DMRS port groups.

Alternatively, each group of measurement resources includes one or more sets of CSI-RS resources, and before the terminal performs measurement on the one or more groups of measurement resources according to the signaling and/or the assumption of the terminal, the method further includes: determining, by the terminal, according to the signaling and/or the assumption of the terminal, at least one of the following information: a number of the measurement resource groups; a signal part and an interference part in each group of measurement resources; a CSI feedback format; and a pre-coding matrix by which each set of CSI-RS resources is mapped on the DMRS ports or DMRS port groups.

Alternatively, the determining, by the terminal, according to the signaling and/or the assumption of the terminal, the CSI feedback format includes at least one of the following: determining, by the terminal and according to an indication of the signaling, that a CQI based on single codeword mode is fed back when RI>1; and determining, by the terminal and according to the indication of the signaling, that two CQIs based on dual codeword mode are fed back when RI>1.

Alternatively, each group of measurement resources includes a set or multiple sets of CSI-RS resources, and the step of determining the CSI feedback format by the terminal according to the signaling and/or the assumption of the terminal includes at least one of the following: when the multiple sets of CSI-RS resources belong to a same CSI Process, feeding, by the terminal, according to an indication of the signaling, one CRI and one CSI item back to the CSI Process; and when the multiple sets of CSI-RS resources belong to the same CSI Process, feeding, by the terminal, according to the indication of the signaling, two CRIs and one or two CSI items to the CSI Process.

Alternatively, when the terminal feeds one CRI back to the CSI Process according to the indication of the signaling, the one CRI corresponds to an index of a CSI-RS resource with a best signal quality in the CSI Process; when the terminal feeds back two CRIs to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

Alternatively, when the terminal feeds one CSI item back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the terminal, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

Alternatively, when the terminal feeds two CSI items back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the terminal; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the terminal, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

Alternatively, the step of determining the signal part and interference part in each group of measurement resources by the terminal according to the signaling and/or the assumption of the terminal includes at least one of the following: determining, by the terminal, according to the signaling, the set of signal CSI-RS resources included in the signal part and the set of IMR resources and the interference CSI-RS resource set included in the interference part;

determining, by the terminal, according to the signaling, the set of signal CSI-RS resources included in the signal part and the set of IMR resources included in the interference part, and determining, by the terminal, according to the assumption of the terminal, the interference CSI-RS resource set included in the interference part; determining, by the terminal, according to the signaling, a binding relationship between the set of signal CSI-RS resources and the set of IMR resources and a correspondence between the set of signal CSI-RS resources and the interference CSI-RS resource set, and determining, according to the assumption of the terminal, the set of signal CSI-RS resources included in the signal part, and determining, according to the binding relationship and the correspondence, the interference CSI-RS resource set and the set of IMR resources included in the interference part; and determining, by the terminal, the set of IMR resources included in the interference part according to the signaling, and determining, according to the assumption of the terminal, the set of signal CSI-RS resources included in the signal part and the interference CSI-RS resource set included in the interference part.

Alternatively, the step of determining the pre-coding matrix corresponding to each set of CSI-RS resources by the terminal according to the signaling and/or the assumption of the terminal includes at least one of the following: determining, by the terminal, according to the signaling, the pre-coding matrix corresponding to each set of CSI-RS resources; selecting, by the terminal, the pre-coding matrix corresponding to each set of CSI-RS resources from a selection range preset by the base station; determining, by the terminal, according to the assumption of the terminal, the pre-coding matrix corresponding to each set of CSI-RS resources; and assuming, by the terminal, that each set of CSI-RS resources has no corresponding pre-coding matrix.

Alternatively, the step of calculating the CSI on the DMRS ports and/or the DMRS port groups corresponding to the each group of measurement resources by the terminal according to the signaling and/or the assumption of the terminal and the measurement result includes: determining, by the terminal, a RI corresponding to each group of measurement resources according to the signaling and/or the assumption of the terminal and the measurement result; determining, by the terminal, a PMI corresponding to each group of measurement resources according to the signaling and/or the assumption of the terminal, the measurement result and the RI; and calculating, by the terminal, a CQI corresponding to each group of measurement resources according to the signaling and/or the assumption of the terminal, the measurement result, the RI and the PMI.

Alternatively, the step of calculating the CQI by the terminal according to the signaling and/or the assumption of the terminal, the measurement result, the RI and the PMI includes: calculating, by the terminal, a signal intensity and an interference intensity corresponding to each group of measurement resources according to the signaling and/or the assumption of the terminal, the measurement result, the RI and the PMI; calculating, by the terminal, a signal to interference plus noise ratio corresponding to each group of measurement resources according to the signal intensity and interference intensity; and obtaining, by the terminal, the CQI by mapping according to the signal to interference plus noise ratio.

Alternatively, the step of calculating the signal intensity by the terminal according to the signaling and/or the assumption of the terminal, the measurement result, the RI and the PMI includes: calculating, by the terminal, the signal intensity according to a channel measured on signal CSI-RS resources included in a signal part of each group of measurement resources and the RI and PMI corresponding to the signal CSI-RS resources.

Alternatively, the step of calculating the interference intensity by the terminal according to the signaling and/or the assumption of the terminal, the measurement result, the RI and the PMI includes: calculating, by the terminal, the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; and summing, by the terminal, the interference intensities corresponding to the interference CSI-RS resources in the interference CSI-RS resource set, and obtaining the interference intensity corresponding to the group of measurement resources by adding the interference intensities measured on the IMR resources included in the interference part to the sum.

A device for feeding channel state information back is provided according to another embodiment of the present invention. The device is applied to a terminal and includes a measurement module, which is configured to perform measurement on one or more groups of measurement resources according to signaling transmitted from a base station and/or an assumption of the device, and obtain a measurement result corresponding to each group of measurement resources; a calculation module, which is configured to calculate, according to the signaling and/or the assumption of the device and the measurement result, CSI on each group of measurement resources corresponding to DMRS ports and/or DMRS port groups; and a feedback module, which is feed part of or all calculated CSI back to the base station.

Alternatively, the CSI corresponding to each group of measurement resources includes at least one of the following: a channels quality indication (CQI); a rank indicator (RI); a pre-coding matrix indicator (PMI); and a channel state information reference signal index (CRI).

Alternatively, measurement resource types in each group of measurement resources include one or more of the following: a cell specific reference signal (CRS); a channel state information reference signal (CSI-RS); and an interference measurement resource (IMR).

Alternatively, each group of measurement resources includes a signal part and an interference part. The signal part includes a set of CSI-RS resources. The interference part includes a set of IMR resources and an interference CSI-RS resource set.

Alternatively, the interference CSI-RS resource set is empty, or the interference CSI-RS resource set includes one set of interference CSI-RS resources, or the interference CSI-RS resource set includes multiple sets of interference CSI-RS resources.

Alternatively, in each group of measurement resources, the set of signal CSI-RS resources and each set of interference CSI-RS resources correspond to same DMRS ports or DMRS port groups. Alternatively, in each group of measurement resources, each set of signal CSI-RS resources and each set of interference CSI-RS resources respectively correspond to different DMRS ports or DMRS port groups.

Alternatively, in each group of measurement resources, the set of signal CSI-RS resources and one or more sets of interference CSI-RS resources in the interference CSI-RS resource set belong to the same CSI Process or belong to different CSI Processes.

Alternatively, a correspondence between signal CSI-RS resources in each group of measurement resources and the DMRS ports or DMRS port groups means that channel properties experienced by signals transmitted on the signal CSI-RS resources is same as channel properties experienced by signals transmitted via the DMRS ports or DMRS port groups.

Alternatively, each group of measurement resources includes one or more sets of CSI-RS resources, and the device further includes a determination module. The determination module is configured to determine, according to the signaling and/or the assumption of the device, at least one of the following information: a number of the measurement resource groups; a signal part and an interference part in each group of measurement resources; a CSI feedback format; and a pre-coding matrix by which each set of CSI-RS resources is mapped on the DMRS ports or DMRS port groups.

Alternatively, the determination module is configured to determine the CSI feedback format according to the signaling and/or the assumption of the device in one of the following manners: determining, according to an indication of the signaling, that a CQI based on single codeword mode is fed back when RI>1; and determining, according to the indication of the signaling, that one or two CQIs based on dual codeword mode are fed back when RI>1.

Alternatively, each group of measurement resources includes one or more sets of CSI-RS resources, the determination module is configured to determine the CSI feedback format according to the signaling and/or the assumption of the device in one of the following manners: when the plurality of sets of CSI-RS resources belong to a same CSI Process, feeding one CRI and one CSI item back to the CSI Process according to an indication of the signaling; and when the plurality of sets of CSI-RS resources belong to the same CSI Process, feeding two CRIs and one or two CSI items to the CSI Process according to the indication of the signaling.

Alternatively, when one CRI is fed back to the CSI Process according to the indication of the signaling, the one CRI corresponds to an index of a CSI-RS resource with a best signal quality in the CSI Process; when two CRIs are fed back to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

Alternatively, when one CSI item is fed back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the device, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

Alternatively, when two CSI items are fed back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the device; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the device, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

Alternatively, the determination module is configured to determine the signal part and the interference part in each group of measurement resources according to the signaling and/or the assumption of the device in one of the following manners: determining, according to the signaling, the set of signal CSI-RS resources included in the signal part and the set of IMR resources and the interference CSI-RS resource set included in the interference part; determining, according to the signaling, the set of signal CSI-RS resources included in the signal part and the set of IMR resources included in the interference part, and determining, according to the assumption of the device, the interference CSI-RS resource set included in the interference part; determining, according to the signaling, a binding relationship between the set of signal CSI-RS resources and the set of IMR resources and a correspondence between the set of signal CSI-RS resources and the interference CSI-RS resource set, and determining, according to the assumption of the device, the set of signal CSI-RS resources included in the signal part, and determining, according to the binding relationship and the correspondence, the interference CSI-RS resource set and the set of IMR resources included in the interference part; and determining the set of IMR resources included in the interference part according to the signaling, and determining, according to the assumption of the device, the set of signal CSI-RS resources included in the signal part and the interference CSI-RS resource set included in the interference part.

Alternatively, the determination module is configured to determine the pre-coding matrix corresponding to each set of CSI-RS resources according to the signaling and/or the assumption of the device in one of the following manners: determining, according to the signaling, the pre-coding matrix corresponding to each set of CSI-RS resources; selecting the pre-coding matrix corresponding to each set of CSI-RS resources from a selection range preset by the base station; determining, according to the assumption of the device, the pre-coding matrix corresponding to each set of CSI-RS resources; and assuming that each set of CSI-RS resources has no corresponding pre-coding matrix.

Alternatively, the calculation module includes: a first determination unit, which is configured to determine a RI corresponding to each group of measurement resources according to the signaling and/or the assumption of the device and the measurement result; a second determination unit, which is configured to determine a PMI corresponding to each group of measurement resources according to the signaling and/or the assumption of the device, the measurement result and the RI; and a calculation unit, which is configured to calculate a CQI corresponding to each group of measurement resources according to the signaling and/or the assumption of the device, the measurement result, the RI and the PMI.

Alternatively, the calculation unit includes: a first calculation subunit, which is configured to calculate a signal intensity and an interference intensity corresponding to each group of measurement resources according to the signaling and/or the assumption of the device, the measurement result, the RI and the PMI; a second calculation subunit, which is configured to calculate a signal to interference plus noise ratio corresponding to each group of measurement resources according to the signal intensity and interference intensity; a mapping unit, which is configured to obtain the CQI by mapping according to the signal to interference plus noise ratio.

Alternatively, the first calculation subunit is configured to calculate the signal intensity according to a channel measured on signal CSI-RS resources included in a signal part of each group of measurement resources and the RI and PMI corresponding to the signal CSI-RS resources.

Alternatively, the first calculation subunit is configured to calculate the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; sum the interference intensities corresponding to the interference CSI-RS resources in the interference CSI-RS resource set; and obtain the interference intensity corresponding to the group of measurement resources by adding the interference intensities measured on the IMR resources included in the interference part to the sum.

In the embodiments of the present invention, the terminal may perform measurement on one or more groups of measurement resources according to signaling transmitted from a base station and/or its own assumption, and calculate, according to the signaling and/or its own assumption as well as the measurement result, CSI on DMRS ports and/or DMRS port groups corresponding to each group of measurement resources and feed part of or all calculated CSI back to the base station, and then calculate the CSI corresponding to each measurement resources based on the signaling transmitted from the base station and/or its own assumption as well as the measurement result, which solves the problem in the related art that in the process of using a CoMP technology to reduce interference of cell-edge users by a coordination of multiple adjacent base stations or points, the CSI fed back by the terminal has a low accuracy and a poor flexibility.

## BRIEF DESCRIPTION OF DRAWINGS

The drawings described herein are used for providing a further understanding of the present invention, and form a part of the present application. The exemplary embodiments and descriptions thereof in the present invention are used to explain the present invention and not to limit the present invention in any improper way. In the drawings:

FIG. 1 is a flowchart of a method for feeding channel state information back according to an embodiment of the present invention;

FIG. 2 is a schematic diagram of a preferred embodiment of the present invention in which two TPs transmit data to one terminal in a non-coherent JT manner;

FIG. 3 is a schematic diagram of an optional measurement resource configuration when two TPs complete the non-coherent JT according to the related art.

FIG. 4 is a schematic diagram of a measurement resource configuration supporting an advanced receiver when two TPs executing the non-coherent JT according to a preferred embodiment of the present invention;

FIG. 5 is a schematic diagram of a signal configuration simultaneously supporting both traditional receiving and advanced receiving by using three IMR resources according to a preferred embodiment of the present invention;

FIG. 6 is a schematic diagram illustrating a problem in the related art that feeding back one or two CQIs based on dual codeword mode when RI>1 does not well support the JT ;

FIG. 7 is a schematic diagram of an optional measurement signal configuration manner in DPS according to a preferred embodiment of the present invention;

FIG. 8 is a schematic diagram illustrating an optional resource occupation timing sequence in CS/CB according to a preferred embodiment of the present invention;

FIG. 9 is a block diagram of a device for feeding channel state information back according to an embodiment of the present invention; and

FIG. 10 is a block diagram of a device for feeding channel state information back according to an embodiment of the present invention.

## DETAILED DESCRIPTION

The present invention will be described in detail with reference to the drawings in conjunction with the embodiments. It is to be noted that if not in collision, the embodiments in the present application and features therein may be combined with each other.
It is to be noted that the terms "first", "second" and the like in the description, claims and drawings of the present invention are used to distinguish similar objects and are not necessarily used to describe a particular order or sequence.

Embodiment one

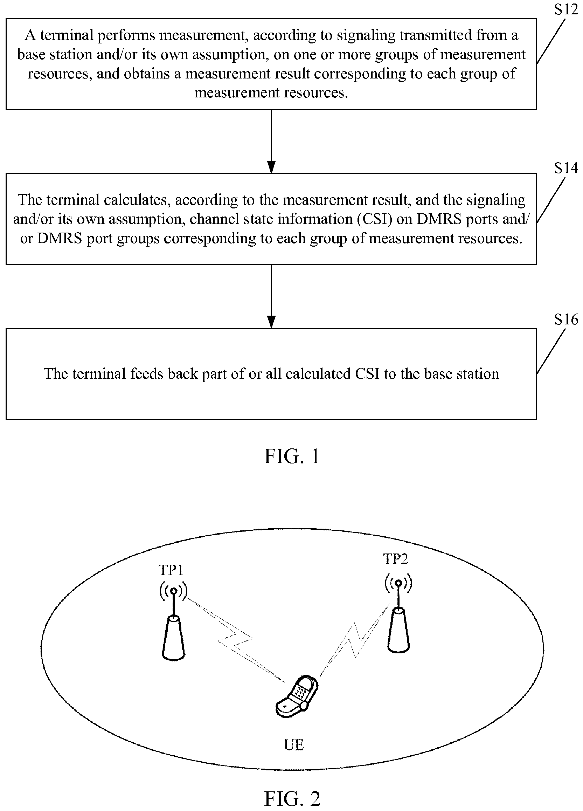

This embodiment of the present application may be operated on a network architecture including one or more UEs and one or more TPs.
The present embodiment provides a method for feeding channel state information back, which is executed on the network architecture described above. FIG. 1 is a flowchart of the method for feeding channel state information back according to an embodiment of the present invention. As shown in FIG. 1, the process includes the steps described below.
In step S12, a terminal performs measurement, according to signaling transmitted from a base station and/or its own assumption, on one or more groups of measurement resources, and obtains a measurement result corresponding to each group of measurement resources.
In step S14, the terminal calculates, according to the signaling and/or its own assumption as well as the measurement result, channel state information (CSI) on each group of measurement resources corresponding to demodulation reference signal (DMRS) ports and/or DMRS port groups.
In step S16, the terminal feeds part of or all calculated CSI back to the base station.
With the above steps, the CSI corresponding to each measurement resources is calculated by jointly considering multiple conditions including the signaling and/or the assumption of the terminal as well as the measurement result, which solves the problem in the related art that in the process of using a CoMP technology to reduce interference of cell-edge users by a coordination of multiple adjacent base stations or points, the CSI fed back by the terminal has a low accuracy and a poor flexibility.

It is to be noted that the assumption of the terminal may include, but is not limited to, presetting a processing order of signals transmitted by multiple TPs when the terminal interacts with the multiple TPs. Also, in the process of the terminal calculating, according to the signaling and/or its own assumption as well as the measurement result, the CSI on the DMRS ports and/or the DMRS port groups corresponding to each group of measurement resources, the calculations of the CSI items corresponding to different groups of measurement resources may use the same signaling transmitted by the base station and/or the assumption of the terminal or different signaling transmitted by the base station and/or assumptions of the terminal.

Alternatively, the CSI corresponding to each group of measurement resources may include, but is not limited to at least one of the following: a CQI; a RI; a PMI and a CRI.

Alternatively, measurement resource types in each group of measurement resources include one or more of the following: a CRS; a CSI-RS; and an IMR.

Alternatively, each group of measurement resources may include a signal part and an interference part. The signal part may include a set of CSI-RS resources. The interference part may include a set of IMR resources and an interference CSI-RS resource set.

Alternatively, the interference CSI-RS resource set is empty, or the interference CSI-RS resource set may include one set of interference CSI-RS resources, or the interference CSI-RS resource set may include multiple sets of interference CSI-RS resources.

Alternatively, in the each group of measurement resources, the set of signal CSI-RS resources and each set of interference CSI-RS resources correspond to same DMRS ports or DMRS ports groups. Alternatively, in each group of measurement resources, each set of signal CSI-RS resources and each set of interference CSI-RS resources respectively correspond to different DMRS ports or DMRS port groups.

Alternatively, in each group of measurement resources, the set of signal CSI-RS resources and one or more sets of interference CSI-RS resources in the interference CSI-RS resource set belong to the same CSI Process or belong to different CSI Processes.

Alternatively, a correspondence between signal CSI-RS resources in each group of measurement resources and the DMRS ports or DMRS port groups means that channel properties experienced by signals transmitted on the signal CSI-RS resources is the same as channel properties experienced by signals transmitted via the DMRS ports or DMRS port groups.

Alternatively, each group of measurement resources may include one or more sets of CSI-RS resources, and before the terminal performs measurement according to the signaling and/or the its own assumption on the one or more groups of measurement resources, the method further includes the following steps.

In step S10, the terminal determines, according to the signaling and its own assumption, at least one of the following:

(1) a number of the measurement resource groups;
(2) the signal part and interference part in each group of measurement resources;
(3) a CSI feedback format; and
(4) a pre-coding matrix by which each set of CSI-RS resources is mapped on the DMRS ports or DMRS port groups.

Alternatively, the step S10 in which the terminal determines the CSI feedback format according to the signaling and its own assumption may include at least one of the following:

(1) the terminal determines, according to an indication of the signaling, that when RI>1, the CSI feedback format is that a CQI based on single codeword mode is fed back,; and
(2) the terminal determines, according to an indication of the signaling, that when RI>1, the CSI feedback format is that one or two CQIs based on dual codeword mode are fed back.

Alternatively, the step S10, in which each group of measurement resources includes one set or a plurality of sets of CSI-RS resources and the terminal determines the CSI feedback format according to the signaling and/or its own assumption, includes at least one of the following:

(1) when the plurality of sets of CSI-RS resources belong to a same CSI Process, the terminal feeds one CRI and one CSI item back to the CSI Process according to the indication of the signaling; and

(2) when the plurality of sets of CSI-RS resources belong to the same CSI Process, the terminal feeds two CRIs and one or two CSI items to the CSI Process according to the indication of the signaling.

In a preferred implementation process, when the terminal feeds one CRI back to the CSI Process according to the indication of the signaling, the one CRI corresponds to an index of a CSI-RS resource with a best signal quality in the CSI Process; and when the terminal feeds back two CRIs to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

Alternatively, when the terminal feeds one CSI item back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the terminal, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

Alternatively, when the terminal feeds two CSI items back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the terminal; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the terminal, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

Alternatively, the step S10, in which the terminal determines the signal part and the interference part in each group of measurement resources according to the signaling and its own assumption, include at least one of the following:

(1) the terminal determines, according to the signaling, the set of signal CSI-RS resources included in the signal part and the set of IMR resources and one interference CSI-RS resource set included in the interference part;

(2) the terminal determines, according to the signaling, the set of signal CSI-RS resources included in the signal part and the set of IMR resources included in the interference part, and determines, according to the assumption of the terminal itself, one interference CSI-RS resource set included in the interference part;

(3) the terminal determines, according to the signaling, a binding relationship between the set of signal CSI-RS resources and the set of IMR resources as well as a correspondence between the set of signal CSI-RS resources and one interference CSI-RS resource set, determines, according to the assumption of the terminal itself, the set of signal CSI-RS resources included in the signal part, and determines, according to the binding relationship and correspondence, interference CSI-RS resource set and the set of IMR resources included in the interference part; and

(4) the terminal determines the set of IMR resources included in the interference part according to the signaling, and determines the set of signal CSI-RS resources included in the signal part and one interference CSI-RS resource set included in the interference part according to the assumption of the terminal itself.

Alternatively, the step S10, in which the terminal determines the pre-coding matrix corresponding to each set of CSI-RS resources according to the signaling and/or the assumption of the terminal, may include one of the following:

(1) the terminal determines the pre-coding matrix corresponding to each set of CSI-RS resources according to the signaling;

(2) the terminal selects the pre-coding matrix corresponding to each set of CSI-RS resources from a selection range preset by the base station;

(3) the terminal determines the pre-coding matrix corresponding to each set of CSI-RS resources according to the assumption of the terminal; and

(4) the terminal assumes that each set of CSI-RS resources has no corresponding pre-coding matrix.

Alternatively, the step S14, in which the terminal calculates, according to the signaling and/or the assumption of the terminal as well as the measurement result, the CSI on the DMRS ports and/or the DMRS port groups corresponding to each group of measurement resources, may include the steps described below.

In step S141, the terminal determines a RI corresponding to each group of measurement resources according to the signaling and/or the assumption of the terminal as well as the measurement result.

In step S142, the terminal determines a PMI corresponding to each group of measurement resources according to the signaling and/or the assumption of the terminal, the measurement result as well as the RI.

In step S143, the terminal calculates a CQI corresponding to each group of measurement resources according to the signaling and/or the assumption of the terminal itself, the measurement result, the RI as well as the PMI.

Alternatively, the step S143, in which the terminal calculates the CQI according to the signaling and/or the assumption of the terminal, the measurement result, the RI as well as the PMI, may include the following steps.

In step S1431, the terminal calculates a signal intensity and an interference intensity corresponding to each group of measurement resources according to the signaling and/or the assumption of the terminal, the measurement result, the RI as well as the PMI.

In step S1432, the terminal calculates, according to the signal intensity and interference intensity, a signal to interference plus noise ratio corresponding to each group of measurement resources.

In step S1433, the terminal obtains the CQI by mapping according to the signal to interference plus noise ratio.

Alternatively, the step S1431, in which the terminal calculates the signal intensity according to the signaling and/or the assumption of the terminal, the measurement result, the RI as well as the PMI, may include the steps described below.

In step S14311, the terminal calculates the signal intensity according to a channel measured on signal CSI-RS resources included in the signal part of each group of measurement resources as well as the RI and PMI corresponding to the signal CSI-RS resources.

Alternatively, the step S1431, in which the terminal calculates the interference intensity according to the signaling and/or the assumption of the terminal, the measurement result, the RI as well as the PMI, may include the steps described below.

In step S14312, the terminal calculates the interference intensity corresponding to each interference CSI-RS resource according to a channel measured on each interference CSI-RS resource in one interference CSI-RS resource set included in the interference part of each group of measurement resources as well as the RI and PMI corresponding to each interference CSI-RS resource.

In step S14313, the terminal sums the interference intensities corresponding to the interference CSI-RS resources in the interference CSI-RS resource set, and obtains the interference intensity corresponding to the group of measurement resources by adding the interference intensities measured on the IMR resources included in the interference part to the sum.

The above preferred implementation process will be further described in conjunction with the following preferred embodiments

Preferred embodiment one (an advanced receiver in JT)

FIG. 2 is a schematic diagram of a preferred embodiment of the present invention in which two TPs transmit data to one terminal in a non-coherent JT manner. As shown in FIG. 2, to assist a TP to decide a transmission mode (TM) and a modulation and coding scheme (MCS) to be used, a UE needs to feed CSI back. The CSI may include, but is not limited to at least one of the following: a RI, a PMI, a CQI and a CRI. The RI is a rank for indicating a channel matrix, that is, the number of layers which may be used for transmission. The PMI is a pre-coding matrix recommended by a terminal according to channel information. The CQI is the modulation and coding scheme recommended by a terminal according to the channel information. The CRI is an index of a CSI-RS with the best signal condition. The calculation of the CQI depends on assumptions of the RI, CRI and PMI. When the two TPs perform the non-coherent JT, a receiving signal of the UE may be represented as:

$$\mathbf{y} = \mathbf{H_1 u_1 x_1 + H_2 u_2 x_2 + I + w}$$

$H_1$ denotes a channel matrix from the TP1 to the UE. $H_2$ denotes a channel matrix from the TP2 to the UE. $u_1$ denotes the pre-coding matrix for data transmission of TP1. $u_2$ denotes the pre-coding matrix for data transmission of TP2. $x_1$ is a symbol transmitted by the TP1. $x_2$ is the symbol transmitted by the TP2. I is an interference from other TPs and w is a noise.

It is assumed that the UE has multiple receiving antennas. y, 1 and w are all vectors. In the non-coherent JT, data transmitted by TP1 and data transmitted by TP2 are precoded separately, and interlayer interference may exist. Using a zero-forcing receiver as an example, a signal transmitted from the TP1 is detected as:

$$\widehat{x_1} = [(H_1 u_1)'(H_1 u_1)]^{-1}(H_1 u_1)'y$$

$$= x_1 + [(H_1 u_1)'(H_1 u_1)]^{-1}(H_1 u_1)'H_2 u_2 x_2 + [(H_1 u_1)'(H_1 u_1)]^{-1}(H_1 u_1)'(1 + w)$$

The second term in the above formula usually is not zero, which means that the interlayer interference exist. In the non-coherent JT, different TPs correspond to different CSI-RS resources, the CSI-RS resource is used for measuring the channel from the TP to the terminal and determining the CSI. During the signal transmission, the signals of different TPs are mapped onto different DMRS ports. For example, in the scenario shown in FIG. 2, if the two TPs each transmit two layers of data to the UE, the TP1 may use the DMRS ports 7 and 8, while TP2 may use the DMRS ports 9 and 10. The pre-coding matrix and MCS used by the TP on the DMRS ports by which Tp transmits data are affected by the CSI fed back by the UE according to the CSI-RS resource measurement. Therefore, the DMRS ports (or port group) used by the same TP and the CSI-RSs of the TP have a correspondence or mapping relationship. In addition, since the base station determines the MCS according to the CSI fed back by the UE, for the non-coherent JT, the terminal needs to consider the interlayer interference of the signals of different TPs when calculating the CSI. According to the current protocol regulation, the interlayer interference needs to be considered in a direct measurement manner.

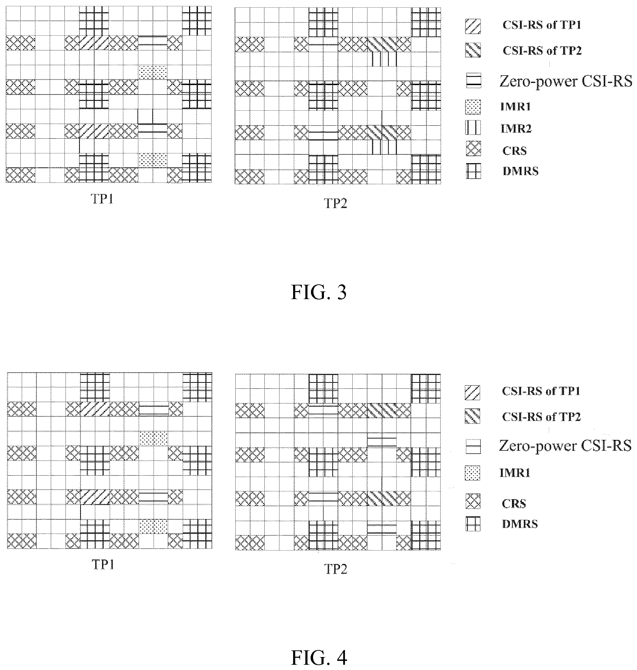

FIG. 3 is a schematic diagram of an optional measurement resource configuration when the two TPs complete the non-coherent JT according to the related art. As shown in FIG. 3, the two TPs configure resources occupied by CSI-RSs of each other to zero power CSI-RSs (ZP CSI-RS) to avoid interference of the CSI-RSs of each other, thereby ensuring that the UE accurately measures the channel from each TP to the UE. Meanwhile, each of the two TPs configures its own IMRs into a PDSCH area of the other TP. The interference measured on these IMRs includes noises, interference of other TPs to the JT and interference of another TP participating in the JT to the data transmission of this TP. Usually the adopted method is to configure two CSI-Processes. Each TP corresponds to one of the two CSI-Processes, and there exist a channel experienced by a CSI-RS resource measurement signal and an interference intensity suffered by an IMR resource measurement signal in each CSI-Process.

According to the measured channel and interference situation, and the base station's indication on the terminal transmission mode and method, the UE may determine the RI and PMI of the recommended precoding matrix. On this basis, the signal to interference plus noise ratio of this TP may be calculated by $\gamma_i = |H_i u_i|_2/P_I$, and the CQI is fed back according to the signal to interference plus noise ratio. $H_i$ denotes the channel matrix measured on the CSI-RS. $P_I$ denotes an interference power measured on the IMR. $u_i$ denotes an assumption of a precoding matrix of TP made by the UE. $|\ |_2$ denotes two norm operation. If the TP is configured with a PMI feedback, $u_i$ may be assumed to be the PMI fed back by the UE. The UE may assume the precoding matrix of the base station according to the channel $H_i$ when there is no PMI feedback.

In the above measurement resource configuration and CQI calculation, signal transmitted from one TP to UE can be considered as interference to the signal transmitted from another TP. With the development of technology and the improvement of chip capability, UE may use various advanced receivers to process the signals. The successive interference cancellation (SIC) technology is a typical one. By using the SIC, in a case where two TPs performs the JT, UE may detect the signal from one TP first, and then minus the TP signal from the received signal, and then detect the signal coming from the other TP. In this case, when detecting the signal of the later TP, the interlayer interference of the previous TP has been eliminated. Configuring the measurement resources and calculating the CQI by using the above method still consider the interlayer interference, causing an underestimation of signal quality and insufficient utilization of the performance of the advanced receivers.

FIG. 4 is a schematic diagram of a measurement resource configuration supporting an advanced receiver when two TPs executing the non-coherent JT according to a preferred embodiment of the present invention. As shown in FIG. 4, the two TPs still configure the resources occupied by CSI-RSs of each other to be ZP CSI-RSs to avoid interference of the CSI-RSs of each other, thereby ensuring that the UE is able to accurately measure the channel from the TP to the UE. It is to be noted that only one IMR needs to be configured here to save the measurement resources. The TP2 configures a position corresponding to the IMR of the TP1 to be the ZP CSI-RS to ensure that the interference measured on the IMR only includes interference and noises of the TPs outside the non-JT coordination set. Under such measurement signal configuration, in this preferred embodiment, the CSI calculation in a SIC receiver has two implementation modes: Implementation mode one, the TP has known a signal processing order of the UE.

If the UE notifies, by signaling, the TP of an order of processing and demodulating signals from two (or more) TPs, or the TP has already instructed the UE about the order of processing the signals of the two (or more) TPs by signaling, the TP is able to know the signal demodulation order of the UE, such that the TP can accurately specify a composition of each measurement group for the UE by signaling. An interactive process of the CSI calculation in this mode is described below.

In the first step, the UE notifies the TP of the order of processing and demodulating signals transmitted from the multiple TPs (two TPs for example)by signaling, or the TP has already instructed the UE about the order of processing the signals of the two TPs by signaling (for example, the signal of TP1 is processed first).

In the second step, the TP configures the UE to feed two CSI items back. The signals of the measurement group of CSI1 are configured as CSI-RS1. The interference CSI-RS set of the measurement group of CSI1 is configured as CSI-RS2. The IMR of the measurement group of CSI1 is configured as IMR1. The signals of the measurement group of CSI2 are configured as CSI-RS2. The interference CSI-RS set of the measurement group of CSI2 is empty. The IMR of the measurement group of CSI2 is configured as IMR1. Each of the two CSI items is configured the CQI feedback in single codeword mode when RI>1.

In third step, by measurement, the UE knows that the channel on the CSI-RS1 and the channel on the CSI-RS2 are respectively $H_1$ and $H_2$, and the interference intensity on the IMR1 is the $P_l$. According to the configuration of the CQI feedback in the single codeword mode when RI>1 and the measured channel matrix, the UE calculates the RI of each CSI item separately. PMI is calculated according to the RI and then the pre-coded matrix $u_1$ and $u_2$ are obtained.

In fourth step, for the signal to interference plus noise ratio on CSI1, the signal is CSI-RS1,the interference CSI-RS set is CSI-RS2. In addition, the interference may also include IMR1. Therefore, the signal to interference plus noise ratio of CSI1 is $\gamma_1=|H_1u_1|_2/(|H_2u_2|_2+P_l)$. For the CSI2, its signal to interference plus noise ratio is CSI-RS2, the interference is IMR1. Therefore, its signal to interference plus noise ratio is $\gamma_2=|H_2u_2|_2/P_l$.

In the fifth step, the terminal determines the CQI1 and CQI2 according to signal to interference plus noise ratios of the CSI1 and CSI2, and feeds the RIs, PMIs and CQIs of the two CSI items back to the base station.

Implementation mode two, the TP has not known the signal processing order of the UE yet.

To reduce signaling overhead, the UE may also only notify the base station that the UE supports the advanced receiver without reporting a specific signal processing process, and, the base station does not need to instruct the UE about the order of processing the signals. In this case, the measurement signal configuration shown in FIG. 4 may still be used. The base station indicates the terminal to feed back the number of CSI items and the signal part of each CSI measurement group. But the UE still needs to assume the interference part, and the UE may provide different interference assumptions for different TPs. The specific processing process is described below.

In the first step, the base station notifies the terminal that the current transmission mode is the non-coherent JT and the UE is configured to feed back two CSI items. The signals of the measurement group of CSI1 are configured as CSI-RS1. The signals of the measurement group of CSI2 are configured as CSI-RS2. Each of the two CSI items has one single codeword CQI feedback when RI>1.

In the second step, the UE decides to firstly process the signal transmitted from the TP1 (which is only given for illustration purposes), and assumes that the interference CSI-RS set of the measurement group of CSI1 is CSI-RS2 and IMR of the measurement group of CSI1 is IMR1, and configures that the interference CSI-RS set of the measurement group of CSI2 is empty and IMR of the measurement group of CSI2 is IMR1.

In the third step, by measurement, the UE knows that the channel on CSI-RS1 and the channel on CSI-RS2 are respectively $H_1$ and $H_2$, the interference intensity on the IMR1 is $P_l$. According to the configuration of the CQI feedback in the single codeword mode when RI>1, the UE calculates the RI of each CSI item separately by using the measured channel matrix, calculates PMI according to the RI, and then obtains the pre-coded matrix $u_1$ and $u_2$.

In the fourth step, for the signal to interference plus noise ratio on the CSI1, the signal is the CSI-RS1, the interference CSI-RS set is the CSI-RS2. The interference further includes the IMR1. Therefore, the signal to interference plus noise ratio of the CSI1 is $\gamma_1= |H_1u_1|_2/(|H_2u_2|_2+P_l)$. For the signal to interference plus noise ratio on the CSI2, the signal is the CSI-RS2, the interference is the IMR1. Therefore, the signal to interference plus noise ratio of the CSI2 is $\gamma_2=|H_2u_2|_2/P_l$.

In the fifth step, the terminal determines the CQI1 and CQI2 according to signal to interference plus noise ratios of the CSI1 and CSI2, and feeds back the RIs, PMIs and CQIs corresponding to the two CSI items to the base station.

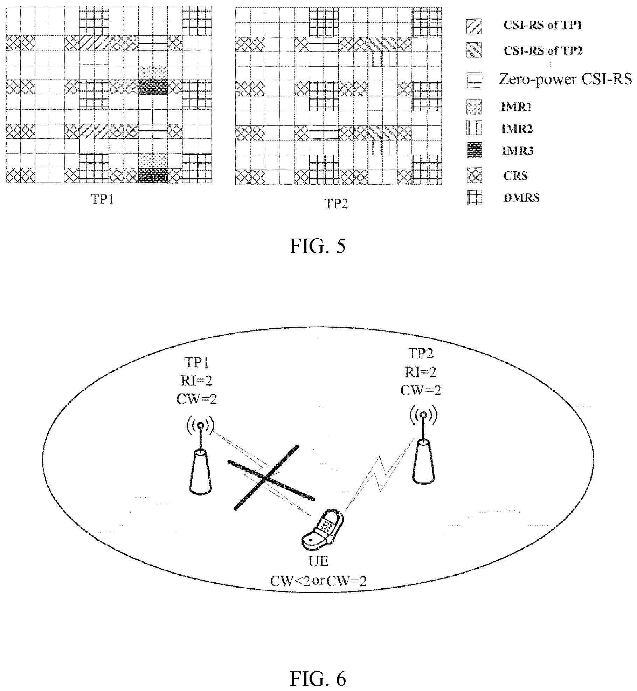

In a backward compatibility design, the above implementation mode requires that the UE at least informs the TP by signaling that the UE supports the advanced receiver. To reduce the uplink signaling overhead and ensure the backward compatibility of the UE not supporting the advanced receiver, a measurement configuration based on three IMRs may also be adopted. FIG. 5 is a schematic diagram of a signal configuration simultaneously supporting both traditional receiving and advanced receiving by using three IMR resources according to a preferred embodiment of the present invention. As shown in FIG. 5, in this case, the UE does not need to report whether or not it supports the advanced receiver. The TP does not know whether the UE supports the advanced receiver. Both the condition that the UE supports the advanced receiver and the condition that the UE does not support advanced receiver need to be considered when configuring the IMR. The IMR1 and IMR2 in FIG. 5 have the same configuration as the IMR in FIG. 3. To maintain the backward compatibility, the TP may configure the CSI-RS1 and IMR1, CSI-RS2 and IMR2 to two CSI Processes respectively. For the UE not supporting the advanced receiver, it is assumed that in the calculation of $\gamma_1$, the signal is CSI-RS1 corresponding to TP1 and the interference part is IMR1, and it is assumed that in the calculation of $\gamma_2$, the signal is CSI-RS2 corresponding to TP2 and the interference part is IMR2.

In addition, the IMR3 is the same as the IMR in FIG. 4, and is configured to measure the interference outside the JT coordination set. The base station may inform the UE supporting the advanced receiver by downlink signaling that the IMR3 is considered as the interference instead of the IMR1 or the IMR2. Meanwhile, the base station informs the UE by the signaling that the JT is being performed and the CSI-RS1 and CSI-RS2 interfere with each other. The UE supporting the advanced receiver determines a measurement set of each feedback CQI according to its own signal processing process. If the UE determines to process the signal transmitted from the TP1 first, it is assumed that in the calculation of $\gamma_1$, the signal is the CSI-RS1 corresponding to the TP1 and the interference part is the IMR3 and the CSI-RS2 corresponding to the TP2; and it is assumed that in the calculation of $\gamma_2$, the signal is the CSI-RS2 corresponding to the TP2 and the interference part only includes the IMR3.

Moreover, to implement a more accurate interference measurement, by using the method of configuring the IMR to the PDSCH area of the TP participating in the JT shown in FIG. 3, although the interference from a coordination TP may be measured, the interference usually is a statistical average value. The interference between the TPs participating in the JT constantly changes along with the channels and the pre-coding of the TPs. It is more valuable to acquire the interference situation at a specific moment. In the solution provided by embodiments of the present disclosure, the JT of two TPs is used as an example, and the measurement signal configuration shown in FIG. 4 may be adopted when the SIC receiver is not used. The signal part of the measurement group of the CSI1 is configured as CSI-RS1, and the interference part of the measurement group of the CSI1 is the CSI-RS2 and IMR. The signal part of the measurement group of the CSI2 is configured as CSI-RS2, and the interference part of the measurement group of the CSI2 is the CSI-RS1 and IMR. The SINR of each of the two CSI processes is calculated using the following formula, and then the CQI is obtained by mapping.

$$\begin{cases} SINR_1 = \dfrac{\left| \mathbf{w}_1 \mathbf{H}_1 \mathbf{u}_1 \right|_2}{P + \left| \mathbf{w}_1 \mathbf{H}_2 \mathbf{u}_2 \right|_2} \\[4mm] SINR_2 = \dfrac{\left| \mathbf{w}_2 \mathbf{H}_2 \mathbf{u}_2 \right|_2}{P + \left| \mathbf{w}_2 \mathbf{H}_1 \mathbf{u}_1 \right|_2} \end{cases}$$

The SINR and CQI are calculated based on the measured channel and fed back PMI, and thus are more accurate. Generally, the technical solutions provided by the embodiment of the present invention can change the manner of treating each CSI process independently in the related art, allow considering the correlation between different CSI processes in the CSI calculation, and provide a flexible configuration of the interference relation configuration by the base station and the interference relation assumption by the UE, better adapting to the non-coherent JT which has the interlayer interference.

Preferred embodiment two (supporting the feedback of a CQI in single codeword mode when RI>1)

The current protocol regulates that for a first transmission, if a fed back RI>1, it needs to feed back one or two CQIs of a dual codeword mode. The CQI in the single codeword format is fed back only when RI=1 for the first transmission. Only in the retransmission, feeding back the CQI based on single codeword mode when RI>1 is supported, which, however limits the gain of the non-coherent JT. FIG. 6 is a schematic diagram illustrating a problem in the related art that feeding back one or two CQIs based on dual codeword mode when RI>1 does not well support the JT. As shown in FIG. 6, it is assumed that a UE has four antennas. Each TP can transmit two data streams to the UE. Theoretically, two TPs are able to jointly transmit up to four data streams at the same time. However, in the current protocol, each UE maximally supports only two codeword streams at the same time. If RI of TP1 is considered to be 2 and the one or two CQIs based on dual codeword mode are fed back to the TP1, the TP1 transmits one codeword stream on each of two layers, or each of TP1 and TP2 transmits one codeword stream to the UE separately. However, no matter which mode is adopted, the maximum number of transmission layers is 2. The receiving antennas of the UE and TP both have remaining spatial freedoms, but there is no codeword transmission. As a result, the UE can select only one TP for transmission instead of performing JT, thus not making a full use of network resources. This problem may be solved by increasing the maximum number of codewords supported by a receiver, which, however has a greater impact on the complexity and standardization of the receiver.

However, in the preferred embodiment provided by the present invention, the base station indicates the UE the number of transmission codeword streams corresponding to the fed back CQI when RI>1 to better support the JT. Specifically, when performing the JT, the TP instructs the UE to feed back the CQI based on single codeword mode when RI>1.If the UE receives signaling instructing to feed back the CQI based on single codeword mode when RI>1, the UE determines the pre-coded matrix and PMI feedback according to the assumption on the multi-layer transmission of the single codeword stream, and calculates the CQI on this basis. According to the technical solutions provided by the embodiment of the present invention, in the above scenario, the UE assumes that TP1 transmits one codeword and RI=2 when calculating the CSI and calculates the PMI and CQI based on the assumption. Meanwhile, the UE assumes that the TP2 transmits one codeword and RI = 2, and calculates the PMI and CQI based on the assumption. Such PMI and CQI feedback better support a scenario where the two TPs each use a single codeword stream to transmit multi-layer data to the UE and better take advantage of the JT gain.

Preferred embodiment three (an accurate CQI calculation and interference avoidance inDPS/DPB)

In the ultra-dense network (UDN), the densely deployed TPs are easy to interfere with each other. A dynamic point selection (DPS) and coordinated scheduling and beamforming (CS/CB) may be adopted to suppress interference, thereby ensuring the quality of service for users. The DPS technology may quickly hands over the UE between serving TPs according to interference instead of complexity, ensuring that a user rate maintains at a high level. The CS/CB avoids the strong interference to cell-edge users by coordinated scheduling of multiple points to ensure the quality of service for the edge users. The preferred embodiment provided by the present invention may provide a more flexible CSI measurement mode and more accurate CSI measurement result for better supporting the DPS and CS/CB.

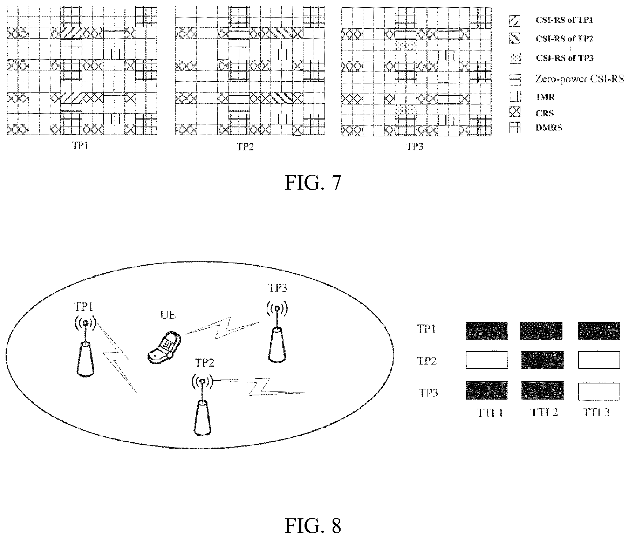

Specifically, an important precondition for obtaining a good performance of the DPS and CS/CB is an accurate CSI measurement and calculation. Only the CSI which is the basis for a point selection is accurate, an optimal transmission point can be selected for the point. The current protocol framework configures a CSI Process for each TP. The UE independently measures and calculates the CSI for each CSI Process without considering a mutual interference between TPs which are performing the DPS. FIG. 7 is a schematic diagram of an optional measurement signal configuration manner in the DPS according to the preferred embodiment of the present invention. As shown in FIG. 7, when the DPS is performed, only one CSI Process may be configured, but multiple CSI-RS resources are included in this CSI Process, and each CSI-RS resource corresponds to one TP in a DPS/DPB coordination set. With the technical solutions provided by the embodiment of the present invention, the UE can calculate the CSI more accurately by considering mutual interference between the TPs, and support the DPS/DPB technology by feeding back multiple CRIs and CSI items.

When not receiving an instruction from a base station for a measurement set, the UE determines the composition of the measurement set according to its own assumptions. The UE performs one CQI calculation on each CSI-RS resource in this CSI Process. When calculating the CQI of one CSI-RS, it may be assumed that all other CSI-RS resources interfere with this one CSI-RS in this CSI Process, and the SINR is calculated by the following formula and the SINR is mapped onto the CQI.

$$SINR_i = \frac{\left| \mathbf{w}_i \mathbf{H}_i \mathbf{u}_i \right|_2}{P + \sum_{\substack{j=0 \\ j \neq i}}^{N} \left| \mathbf{w}_i \mathbf{H}_j \mathbf{u}_j \right|_2}$$

Alternatively, only the CSI-RS resource with the strongest signal or the best signal quality except the one CSI-RS resource or the CSI-RS resource which is the strongest interference to the one CSI-RS resource is considered as the interference. After a series of calculations, an index of the best CSI-RS of the CQI is taken as a first CRI feedback for the point selection. If it is configured that two CRIs are fed back, an index of the strongest CSI-RS resource except the first CRI or the CSI-RS resource which is the strongest interference to the first CRI is taken as a second CRI feedback. After receiving the second CRI feedback, the network may consider muting the TP corresponding to the second CRI on resources used by the UE to avoid the interference to the UE.

In addition, the TP usually has a certain understanding of the mutual interference relationship between different TPs by exchanging scheduling results or prior knowledge of a network topology on X2 interfaces. With the technical solutions provided by the embodiment of the present invention, the TP is able to use the known information to configure an interference part and a signal part of a measurement group for the UE by signaling, thereby making the CSI more accurate. For example, FIG. 8 is a schematic diagram illustrating an optional resource occupation timing sequence in CS/CB according to a preferred embodiment of the present invention. As shown in FIG. 8, in the transmission point which is participating in a DPS/DPS coordination, the network considers that the transmission of the TP1 is interfered by the TP2, the transmission of the TP2 is interfered by the TP1 and TP3, and the transmission of the TP3 is not significantly interfered by other TP. The network indicates, by the signaling, that an interference set corresponding to the CSI-RS1 is the CSI-RS2, the interference set corresponding to the CSI-RS2 is the CSI-RS1 and CSI-RS3, and an interference CSI-RS resource set corresponding to the CSI-RS3 is empty. When the UE calculates the CQI of the TP1, the used signal is the CSI-RS 1, and the interference is the interference measured on CSI-RS2 and IMR. When calculating the CQI of the TP2, the used signal is the CSI-RS2, and the interference is interference measured on the CSI-RS 1, CSI-RS3 and IMR. When calculating the CQI of the TP3, the signal is the CSI-RS3, and the interference only needs to consider the measurement situation on the IMR. After determining the signal part and interference part according to mutual interference information provided by the network, the signal to interference plus noise ratio can be calculated according to the following formula, then the CQI is determined.

$$\gamma = \left| \mathbf{H}_i \mathbf{u}_i \right|_2 / (P_I + \sum_j \left| \mathbf{H}_j \mathbf{u}_j \right|_2)$$

$H_i$ is the channel measured on a CSI-RS in the measurement group. $H_j$ is the channel measured on the CSI-RS which causes interference to the signal CSI-RS. $u_i$ is a transmission precoding matrix of the TP, the TP notifies the UE of the transmission precoding matrix by the signaling or the UE obtains the transmission precoding matrix by assuming with a certain rule. After calculating the CQI corresponding to each CSI-RS, the index of the CSI-RS of the best CQI is taken as the first CRI feedback for the point selection. If it is configured that the two CRIs are fed back, the index of the strongest CSI-RS resource except the first CRI or the CSI-RS resource which is the strongest interference to the first CRI is taken as the second CRI feedback for the point mute and interference avoidance. A fed back first CSI item not only reflects the signal situation on the CSI-RS resource corresponding to the first CRI, but also reflects the interference of other TPs in the DPS/DPB coordination set, which is more accurate. When different CSI-RSs of different TPs are configured to different CSI-Processes, the UE assumes the interference relationship or the TP indicates the interference relationship by the signaling, thereby achieving a more accurate CSI measurement to support the DPS/DPB. However, in this case, the CRI feedback is not supported.

Preferred embodiment four (accurate CSI and interference coordination in a CS/CB)

In this preferred embodiment, the CSI and some fed back interference coordination information are similar to those in a DPS/DPB. TPs in a CS/CB coordination set usually have closer coordination. Usually, the measurement under the CS/CB may be supported by configuring multiple sets of CSI-RS resources in one CSI Process and allocating one set of CSI-RS resources in the one CSI Process for each TP in the CS/CB coordination set.

In the CS/CB, a serving cell of a UE usually has been determined, and it is not necessary to calculate a corresponding CQI for each set of CSI-RS resources and feed back an index of the CSI-RS resource (CRI) with the best CQI for the point selection, as in the DPS. In the CS/CB, the UE takes the CSI-RS resource corresponding to the current serving cell as a signal part of a measurement group of a first CSI item to be fed back. When a base station does not notify the UE of an interference CSI-RS resource set of the measurement group of the first CSI item, the UE determines the interference CSI-RS resource set by itself. The interference CSI-RS resource set may be all CSI-RS resources excluding the signal CSI-RS resource in this CSI Process; or be the CSI-RS resource with the strongest signal except the signal CSI-RS resource in this CSI Process, or be the CSI-RS resource corresponding to a TP (the TP is in the CS/CB coordination set, that is, the CSI-RS resource of the TP is in the CSI Process) where the UE considers that the TP causes a serious interference to the UE according to other measurements of the UE (measurements on a CRS and PSS/SSS)

The interference coordination effects between coordinating TPs of the CS/CB may be enhanced by various forms of interacting (for example, RNTP, HII, OI on an X2 interface). The coordinating TPs may transmit their own scheduling decision on the next transmission time intervals (TTI) to a serving TP of the UE. The serving TP determines an interference relationship of the coordinating TPs to the UE according to the scheduling decision of the serving TP itself, and configures the interference CSI-RS resource set in the measurement group for the UE, such that the fed back CSI more accurately reflects a channel situation. For example, in a CS/CB coordination set including three TPs shown in FIG. 8, the TP1 is a serving TP for the UE, and the TP2 and TP3 are the coordinating TPs. The right side of FIG. 8 shows the scheduling situation of resources occupied by the UE in three different TTIs made by the base station in the CS/CB coordination set. The TP2 and TP3 use an interaction mechanism between the TPs to notify the TP1 of scheduling results of the TP2 and TP3. The TP1 can configure different interference CSI-RS resource sets in different TTIs for the measurement group of the UE by the signaling, which makes the fed back CQI more accurate. In addition, with the technical solutions provided by the embodiment of the present invention, on the TTI1, the TP3 also occupies the resources used by the UE. Therefore, TP1 informs the UE, by signaling, that in the calculation of the CQI of the TTI1, the interference CSI-RS resource set is the CSI-RS3 corresponding to the TP3. On the TTI2, the TP2 and TP3 both use the resources of the UE, TP1 informs, by signaling, the UE that in the calculation of the CQI of the TTI2, the interference CSI-RS resource set is the CSI-RS3 corresponding to the TP3 and the CSI-RS2 corresponding to the TP2. For the TTI3, only the TP1 in the CS/CB coordination set uses the resources of the UE, the TP1 informs, by signaling, the UE that in the calculation of the CQI of the TTI2, the interference CSI-RS resource set is empty.

In the CS/CB, the interference of the coordinating base station to the user is avoided by using the technical solutions provided by the embodiment of the present invention and configuring the UE to feed back one CRI and two CSI items. In this case, the fed back first CSI item is the CSI corresponding to the signal CSI-RS resource that has been discussed above. The CRI is the index of the CSI-RS resource with the strongest signal except the signal CSI-RS resource; or the index of the CSI-RS resource which is the strongest interference to the signal CSI-RS resource. The UE may determine which CSI-RS resource is the strongest interference to the signal CSI-RS resource with the help of other measurements (measurements on the CRS and PSS/SSS). The second CSI item is the CSI on the CSI-RS resource corresponding to the fed back CRI. The signal in the measurement set of this CSI is the CSI-RS resource corresponding to the fed back CRI. The interference CSI-RS resource set may be empty by default, or other assumptions which are considered to be appropriate by the UE may be used. For the second CSI item, the RI, PMI and CQI need to be fed back.

In addition, after receiving the CRI and CSI, the network may determine the TP corresponding to the CRI according to a correspondence between the TP and the CSI-RS resource, that is, which coordinating TP interferes with the UE most seriously. Meanwhile, which precoding matrix causes the most serious interference to the UE when being used by interference TP is determined according to a fed back PMI in the second CSI item, then an intensity of this interference is determined according to the CQI and a series of measures is taken to avoid the interference to the UE. For example, it is observed in the CQI that the interference is very serious, to avoid the interference to the UE, the network may make such a limit that the TP causing the most serious interference can only use the precoding matrix which is orthogonal or nearly orthogonal to the fed back PMI in the second CSI item on the resources used by the UE. If the RI in the second CSI item is large and the CQI is good, the network may initiate a handover process to hand over the UE to the TP which causes the most serious interference. If it is found in the CQI that the UE is not significantly affected by the TP causing the most serious interference on, the network may take no special measures.

From the description of the embodiments described above, it will be apparent to those skilled in the art that the methods in the embodiments described above may be implemented by software plus a necessary general-purpose hardware platform, or may of course be implemented by hardware, but in many cases, the former is a preferred implementation mode. Based on this understanding, the solutions provided by the present disclosure substantially, or the part contributing to the existing art, may be embodied in the form of a software product. The computer software product is stored in a storage medium (such as a read-only memory (ROM)/random access memory (RAM), a magnetic disk or an optical disk) and includes several instructions for enabling a terminal device (which may be a mobile phone, a computer, a server, a network device, or the like) to execute the method according to each embodiment of the present disclosure.

Embodiment two

The present embodiment further provides a device for feeding channel state information back. The device is used for implementing the above-mentioned embodiments and preferred implementations. What has been described will not be repeated. As used below, the term "module" may be software, hardware or a combination thereof capable of implementing predetermined functions. The device in the embodiments described below is preferably implemented by software, but implementation by hardware or by a combination of software and hardware is also possible and conceived.

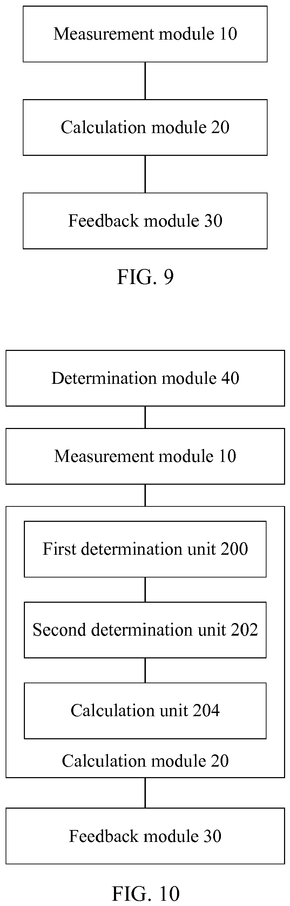

FIG. 9 is a block diagram of a device for feeding channel state information back according to an embodiment of the present invention. As shown in FIG. 9, the device is applied to a terminal, and includes a measurement module 10, which is configured to perform measurement on one or more groups of measurement resources according to signaling transmitted from a base station and/or an assumption of the device, and obtain a measurement result corresponding to each group of measurement resources; a calculation module 20, which is configured to calculate, according to the signaling and/or the assumption of the device and the measurement result, CSI on DMRS ports and/or DMRS port groups corresponding to the each group of measurement resources; and a feedback module 30, which is configured to feed part of or all calculated CSI back to the base station.

Alternatively, the CSI corresponding to each group of measurement resources may include, but is not limited to at least one of the following: a CQI; a RI; a PMI and a CRI.

Alternatively, measurement resource types in each group of measurement resources include one or more of the following: a CRS; a CSI-RS; and an IMR.

Alternatively, each group of measurement resources may include a signal part and an interference part. The signal part may include a set of CSI-RS resources. The interference part may include a set of IMR resources and an interference CSI-RS resource set.

Alternatively, the interference CSI-RS resource set is empty, or the interference CSI-RS resource set may include one set of interference CSI-RS resources, or the interference CSI-RS resource set may include multiple sets of interference CSI-RS resources.

Alternatively, in each group of measurement resources, the set of signal CSI-RS resources and each set of interference CSI-RS resources correspond to same DMRS ports or DMRS port groups. Or, in each group of measurement resources, each set of signal CSI-RS resources s and each set of interference CSI-RS resources respectively correspond to different DMRS ports or DMRS port groups.

Alternatively, in each group of measurement resources, the set of signal CSI-RS resources and one or more sets of interference CSI-RS resources in the interference CSI-RS resource set belong to a same CSI Process or belong to different CSI Processes.

Alternatively, a correspondence between signal CSI-RS resources in each group of measurement resources and the DMRS ports or DMRS port groups means that channel properties experienced by signals transmitted on the signal CSI-RS resources is same as channel properties experienced by signals transmitted via the DMRS ports or DMRS port groups.

Alternatively, each group of measurement resources includes one set of CSI-RS resources or multiple sets of CSI-RS resources. FIG. 10 is a block diagram of a device for feeding channel state information back according to an embodiment of the present invention. As shown in FIG. 10, in addition to all modules shown in FIG. 9, the device further includes: a determination module 40, which is configured to determine, according to the signaling and/or the assumption of the device at least one of the following information: the number of the measurement resource groups; a signal part and an interference part in each group of measurement resources; a CSI feedback format; and a pre-coding matrix by which each set of CSI-RS resources is mapped on the DMRS ports or DMRS port groups.

Alternatively, the determination module 40 is configured to determine the CSI feedback format according to the signaling and/or the assumption of the device in one of the following manners: the determination module 40 determines, according to an indication of the signaling, that a CQI of a CQI based on single codeword mode is fed back when RI>1; and the determination module 40 determines, according to the indication of the signaling, that one or two CQIs based on dual codeword mode are fed back when RI>1.

Alternatively, each group of measurement resources includes one set of CSI-RS resources or multiple sets of CSI-RS resources. The determination module 40 is configured to determine the CSI feedback format according to the signaling and/or the assumption of the device in one of the following manners: when the multiple sets of CSI-RS resources belong to a same CSI Process, feeding one CRI and one CSI item back for the CSI Process according to the indication of the signaling; and when the multiple sets of CSI-RS resources belong to the same CSI Process, feeding two CRIs and one or two CSI items for the CSI Process according to the indication of the signaling.

Alternatively, when one CRI is fed back to the CSI Process according to the indication of the signaling, the one CRI corresponds to an index of a CSI-RS resource with a best signal quality in the CSI Process; when two CRIs are fed back to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

Alternatively, when one CSI item is fed back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the device, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

Alternatively, when two CSI items are fed back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the device; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the device, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

Alternatively, the determination module 40 is configured to determine the signal part and the interference part in each group of measurement resources according to the signaling and/or the assumption of the device in one of the following manners: determining, according to the signaling, the set of signal CSI-RS resources included in the signal part and the set of IMR resources and one interference CSI-RS resource set included in the interference part; determining, according to the signaling, the set of signal CSI-RS resources included in the signal part and the set of IMR resources included in the interference part, and determining, according to the assumption of the device, the interference CSI-RS resource set included in the interference part; determining, according to the signaling, a binding relationship between the set of signal CSI-RS resources and the set of IMR resources and a correspondence between the set of signal CSI-RS resources and the interference CSI-RS resource set, and determining, according to the assumption of the device, the set of signal CSI-RS resources included in the signal part, and determining, according to the binding relationship and the correspondence, the interference CSI-RS resource set and the set of IMR resources included in the interference part; and determining the set of IMR resources included in the interference part according to the signaling, and determining, according to the assumption of the device, the set of signal CSI-RS resources included in the signal part and the interference CSI-RS resource set included in the interference part.

Alternatively, the determination module 40 is configured to determine the pre-coding matrix corresponding to each set of CSI-RS resources according to the signaling and/or the assumption of the device in one of the following manners: determining, according to the signaling, the pre-coding matrix corresponding to each set of CSI-RS resources; selecting the pre-coding matrix corresponding to each set of CSI-RS resources from a selection range preset by the base station; determining, according to the assumption of the device, the pre-coding matrix corresponding to each set of CSI-RS resources; and assuming that each set of CSI-RS resources has no corresponding pre-coding matrix.

Alternatively, as shown in FIG. 10, the calculation module 20 may include: a first determination unit 200, which is configured to determine a RI corresponding to each group of measurement resources according to the signaling and/or the assumption of the device and the measurement result; a second determination unit 202, which is configured to determine a PMI corresponding to each group of measurement resources according to the signaling and/or the assumption of the device, the measurement result and the RI; and a calculation unit 204, which is configured to calculate a CQI corresponding to each group of measurement resources according to the signaling and/or the assumption of the device, the measurement result, the RI and the PMI.

Alternatively, the calculation unit 204 may include: a first calculation subunit (not shown in the figure), which is configured to calculate a signal intensity and an interference intensity corresponding to each group of measurement resources according to the signaling and/or the assumption of the device, the measurement result, the RI and the PMI; a second calculation subunit (not shown in the figure), which is configured to calculate a signal to interference plus noise ratio corresponding to each group of measurement resources according to the signal intensity and interference intensity; a mapping unit (not shown in the figure), which is configured to obtain the CQI by mapping according to the signal to interference plus noise ratio.

Alternatively, the first calculation subunit is configured to calculate the signal intensity according to a channel measured on signal CSI-RS resources included in a signal part of each group of measurement resources and the RI and PMI corresponding to the signal CSI-RS resources.

Alternatively, the first calculation subunit is configured to calculate the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; sum the interference intensities corresponding to the interference CSI-RS resources in the interference CSI-RS resource set; and obtain the interference intensity corresponding to the group of measurement resources by adding the interference intensities measured on the IMR resources included in the interference part to the sum.

It is to be noted that the various modules described above may be implemented by software or hardware. Implementation by hardware may, but may not necessarily, be performed in the following manners: the various modules described above are located in a same processor or different processors respectively.

Embodiment three

A storage medium is further provided by an embodiment of the present invention. Alternatively, in this embodiment, the storage medium may be configured to store program codes for executing the steps described below.

In step S1, performing measurement on one or more groups of measurement resources according to signaling transmitted from a base station and/or its own assumption, and obtaining a measurement result corresponding to each group of measurement resources.

In step S2, calculating, according to the signaling and/or its own assumption and the measurement result, CSI on DMRS ports and/or DMRS port groups corresponding to the each group of measurement resources.

In step S3, feeding back part of or all calculated CSI to the base station.

Alternatively, the storage medium is further configured to store program codes for executing the following step: determining, according to the signaling and/or its own assumption, at least one of the following information:

(1) the number of the measurement resource groups;
(2) the signal part and the interference part in each group of measurement resources;
(3) a CSI feedback format; and
(4) a pre-coding matrix by which each set of CSI-RS resources is mapped on the DMRS ports or DMRS port groups.

Alternatively, the storage medium is further configured to store program codes for executing the following steps: determining a RI corresponding to each group of measurement resources according to the signaling and/or its own assumption, and the measurement result; determining a PMI corresponding to each group of measurement resources according to the signaling and/or its own assumption, the measurement results as well as the RI; and calculating a CQI corresponding to each group of measurement resources according to the signaling and/or its own assumption, the measurement result, the RI as well as the PMI.

Alternatively, the storage medium is further configured to store program codes for executing the following steps: calculating a signal intensity and an interference intensity corresponding to each group of measurement resources according to the signaling and/or its own assumption, the measurement result, the RI and the PMI; calculating a signal to interference plus noise ratio corresponding to each group of measurement resources according to the signal intensity and interference intensity; and obtaining the CQI by mapping according to the signal to interference plus noise ratio.

Alternatively, the storage medium is further configured to store program codes for executing the following step: calculating the signal intensity according to a channel measured on signal CSI-RS resources included in a signal part of each group of measurement resources and the RI and PMI corresponding to the signal CSI-RS resources.

Alternatively, the storage medium is further configured to store program codes for executing the following steps: calculating the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; summing the interference intensities corresponding to the interference CSI-RS resources in the interference CSI-RS resource set; and obtaining the interference intensity corresponding to the group of measurement resources by adding the interference intensities measured on the IMR resources included in the interference part to the sum.

Alternatively, in this embodiment, the storage medium may include, but are not limited to, a U disk, a read-only memory (ROM), a random access memory (RAM), a mobile hard disk, a magnetic disk, an optical disk or another medium capable of storing program codes.

Alternatively, in this embodiment, a processor executes the following steps according to the program codes stored in the storage medium.

In step S1, performing measurement on one or more groups of measurement resources according to signaling transmitted from a base station and/or its own assumption, and obtaining a measurement result corresponding to each group of measurement resources.

In step S2, calculating, according to the signaling and/or its own assumption and the measurement result, CSI on DMRS ports and/or DMRS port groups corresponding to the each group of measurement resources.

In step S3, feeding back part of or all calculated CSI to the base station.

Alternatively, in this embodiment, a processor executes, according to the program codes already stored in the storage medium, a step of determining, according to the signaling and/or its own assumption, at least one of the following information: the number of the measurement resource groups; the signal part and the interference part in each group of measurement resources; a CSI feedback format; and a pre-coding matrix by which each set of CSI-RS resources is mapped on the DMRS ports or DMRS port groups ;

Alternatively, in this embodiment, the processor executes, according to the program codes stored in the storage medium, the following steps: determining the RI corresponding to each group of measurement resources according to the signaling and/or its own assumption, and the measurement result; determining the PMI corresponding to each group of measurement resources according to the signaling and/or its own assumption, the measurement result as well as the RI; and calculating the CQI corresponding to each group of measurement resources according to the signaling and/or its own assumption, the measurement result, the RI as well as the PMI.

Alternatively, in this embodiment, the processor executes, according to the program codes stored in the storage medium, the following steps: calculating the signal intensity and interference intensity corresponding to each group of measurement resources according to the signaling and/or its own assumption, the measurement result, the RI as well as the PMI; calculating, according to the signal intensity and interference intensity, the signal to interference plus noise ratio corresponding to the each group of measurement resources; and obtaining the CQI by mapping according to the signal to interference plus noise ratio.

Alternatively, in this embodiment, the processor executes, according to the program codes stored in the storage medium, the following step: calculating the signal intensity according to a channel measured on signal CSI-RS resources included in the signal part of each group of measurement resources and the RI and PMI corresponding to the signal CSI-RS resources.

Alternatively, in this embodiment, the processor executes, according to the program codes stored in the storage medium, the following steps: calculating the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; summing the interference intensities corresponding to the interference CSI-RS resources in the interference CSI-RS resource set; and obtaining the interference intensity corresponding to the group of measurement resources by adding the interference intensities measured on the IMR resources included in the interference part to the sum.

Alternatively, for specific examples in this embodiment, reference may be made to the examples described in the above embodiments and optional implementation modes, and repetition will not be made in this embodiment.

With the above embodiments of the present invention, a more flexible feedback support is provided for the CoMP, that is, the feedback support not only supports for feeding back CQI based on single codeword mode when RI>1, but also supports that the terminal adopts different assumptions for different CSI-RS resources when calculating the CQI, and supports considering the CSI-RS resources as interference, thereby allowing multiple TPs to use multiple data streams to transmit codewords to the terminal by using the non-coherent JT technology in a case where the current terminal only supports transmission of two codewords at the same time, which can especially improve the UE performance in an densely deployed network. In addition, according to the embodiments of the present invention, in the non-coherent JT, the interlayer interference of different TPs may be considered in the process of calculating the CQI. In addition, it is allowed that the terminal adopts different calculation manners for the CQI of the signals from different TPs while using advanced receiving technologies such as a sequential interference cancellation, so that performance advantages of advanced receivers can be more fully utilized, and IMR resources can be saved at the same time. In addition, in the CS/CB and DPS/DPB, according to the embodiments of the present invention, the base station informs the terminal of the CSI-RS resources that may cause interference to the terminal, or the terminal infers the CSI-RS resources that may cause interference to the terminal, such that the CQI calculation is more accurate than that with only the interference on the IMR resources being considered, thereby improving the CoMP performance. Finally, the embodiments of the present invention further allow that the terminal feeds back multiple CRIs for indicating the indexes of the CSI-RS resources that causes strong interference to the terminal, providing a better support for the CS/CB and DPS/DPB.

Apparently, those skilled in the art should understand that the above-mentioned modules or steps of the present disclosure may be implemented by a general-purpose computing device. The modules or steps may be integrated on a single computing device or distributed on a network formed by multiple computing devices, and alternatively, the modules or steps may be implemented by program codes executable by the computing devices, so that modules or steps may be stored in a storage device and executed by the computing devices. In some circumstances, the illustrated or described steps may be executed in sequences different from those described herein, or the modules or steps may be made into various integrated circuit modules separately, or multiple modules or steps therein may be made into a single integrated circuit module for implementation. In this way, the present invention is not limited to any specific combination of hardware and software.

The above are only preferred embodiments of the present invention and are not intended to limit the present invention, and for those skilled in the art, the present invention may have various modifications and variations. Any modifications, equivalent substitutions, improvements and the like made within the spirit and principle of the present invention fall within the scope of the present invention.

**INDUSTRIAL APPLICABILITY**

As described above, a method and device for feeding channel state information back provided by the embodiments of the present invention have the following beneficial effects: improving accuracy and flexibility of the CSI fed back by the terminal.

**Claims**

1. A method for feeding channel state information back, comprising:

performing measurement, by a terminal, on one or more groups of measurement resources according to signaling transmitted from a base station and/or an assumption of the terminal, and obtaining a measurement result corresponding to each group of measurement resources;
calculating, by the terminal, according to the signaling and/or the assumption of the terminal and the measurement result, channel state information, CSI on each group of measurement resources corresponding to demodulation reference signal, DMRS, ports and/or DMRS port groups ; and

feeding, by the terminal, part of or all calculated CSI back to the base station.

2.   The method according to claim 1, wherein the CSI corresponding to each group of measurement resources comprises at least one of:

    a channels quality indication, CQI;
    a rank indicator, RI;
    a pre-coding matrix indicator, PMI; and
    a channel state information reference signal index, CRI.

3.   The method according to claim 1, wherein measurement resource types in each group of measurement resources comprise one or more of:

    a cell specific reference signal, CRS;
    a channel state information reference signal, CSI-RS; and
    an interference measurement resource, IMR.

4.   The method according to claim 1, wherein each group of measurement resources includes a signal part and an interference part, wherein the signal part comprises a set of signal CSI-RS resources, and the interference part comprises a set of IMR resources and an interference CSI-RS resource set.

5.   The method according to claim 4, wherein the interference CSI-RS resource set is empty, or the interference CSI-RS resource set comprises one set of interference CSI-RS resources, or the interference CSI-RS resource set comprises a plurality of sets of interference CSI-RS resources.

6.   The method according to claim 4, wherein the set of signal CSI-RS resources and each set of interference CSI-RS resources in each group of measurement resources correspond to same DMRS ports or DMRS port groups; or each set of signal CSI-RS resources and each set of interference CSI-RS resources in each group of measurement resources respectively correspond to different DMRS ports or DMRS port groups.

7.   The method according to claim 4, wherein in the each group of measurement resources, the set of signal CSI-RS resources and one or more sets of interference CSI-RS resources in the interference CSI-RS resource set belong to a same channel state information, CSI, process or belong to different CSI processes.

8.   The method according to claim 1, wherein a correspondence between signal CSI-RS resources in each group of measurement resources and the DMRS ports or DMRS port groups means that channel properties experienced by signals transmitted on the signal CSI-RS resources is same as channel properties experienced by signals transmitted via the DMRS ports or DMRS port groups.

9.   The method according to claim 1, wherein each group of measurement resources comprises one or more sets of CSI-RS resources,
before the terminal performs measurement according to the signaling and/or the assumption of the terminal on the one or more groups of measurement resources, the method further comprises:
determining, by the terminal and according to the signaling and/or the assumption of the terminal, at least one of:

    a number of the measurement resources groups;
    a signal part and an interference part in each group of measurement resources;
    a CSI feedback format; and
    a pre-coding matrix by which each set of CSI-RS resources is mapped on the DMRS ports or DMRS port groups.

10.  The method according to claim 9, wherein the determining, by the terminal, according to the signaling and/or the assumption of the terminal, the CSI feedback format comprises at least one of:

    determining, by the terminal and according to an indication of the signaling, that a CQI based on single codeword mode is fed back when RI>1; and
    determining, by the terminal and according to the indication of the signaling, that one or two CQIs based on dual codeword mode are fed back when RI>1.

**11.** The method according to claim 9, wherein each group of measurement resources comprises one or more sets of CSI-RS resources, and the determining, by the terminal, according to the signaling and/or the assumption of the terminal, the CSI feedback format comprises at least one of:

when the plurality of sets of CSI-RS resources belong to a same CSI Process, feeding, by the terminal, according to an indication of the signaling, one CRI and one CSI item back to the CSI Process; and

when the plurality of sets of CSI-RS resources belong to the same CSI Process, feeding, by the terminal, according to the indication of the signaling, two CRIs and one or two CSI items to the CSI Process.

**12.** The method according to claim 11, wherein when the terminal feeds one CRI back to the CSI Process according to the indication of the signaling, the one CRI corresponds to an index of a CSI-RS resource with a best signal quality in the CSI Process; when the terminal feeds back two CRIs to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

**13.** The method according to claim 11 or 12, comprises at least one of:
wherein when the terminal feeds one CSI item back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the terminal, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

**14.** The method according to claim 11 or 12, wherein when the terminal feeds two CSI items back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the terminal; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the terminal, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

**15.** The method according to claim 9, wherein determining, by the terminal, according to the signaling and/or the assumption of the terminal, the signal part and interference part in each group of measurement resources comprises at least one of:

determining, by the terminal, according to the signaling, the set of signal CSI-RS resources included in the signal part and the set of IMR resources and the interference CSI-RS resource set included in the interference part;

determining, by the terminal, according to the signaling, the set of signal CSI-RS resources included in the signal part and the set of IMR resources included in the interference part, and determining, by the terminal, according to the assumption of the terminal, the interference CSI-RS resource set included in the interference part;

determining, by the terminal, according to the signaling, a binding relationship between the set of signal CSI-RS resources and the set of IMR resources and a correspondence between the set of signal CSI-RS resources and the interference CSI-RS resource set, and determining, according to the assumption of the terminal, the set of signal CSI-RS resources included in the signal part, and determining, according to the binding relationship and the correspondence, the interference CSI-RS resource set and the set of IMR resources included in the interference part; and

determining, by the terminal, the set of IMR resources included in the interference part according to the signaling, and determining, according to the assumption of the terminal, the set of signal CSI-RS resources included in the signal part and the interference CSI-RS resource set included in the interference part.

16. The method according to claim 9, wherein determining, by the terminal, according to the signaling and/or the assumption of the terminal, the pre-coding matrix corresponding to each set of CSI-RS resources comprises at least one of:

determining, by the terminal, according to the signaling, the pre-coding matrix corresponding to each set of CSI-RS resources;
selecting, by the terminal, the pre-coding matrix corresponding to each set of CSI-RS resources from a selection range preset by the base station;
determining, by the terminal, according to the assumption of the terminal, the pre-coding matrix corresponding to each set of CSI-RS resources; and
assuming, by the terminal, that each set of CSI-RS resources has no corresponding pre-coding matrix.

17. The method according to claim 1, wherein the calculating, by the terminal, according to the signaling and/or the assumption of the terminal and the measurement result, the CSI on the each group of measurement corresponding to the DMRS ports and/or the DMRS port groups respectively corresponding to resources comprises:

determining, by the terminal, a RI corresponding to each group of measurement resources according to the signaling and/or the assumption of the terminal and the measurement result;
determining, by the terminal, a PMI corresponding to each group of measurement resources according to the signaling and/or the assumption of the terminal, the measurement result and the RI; and
calculating, by the terminal, a CQI corresponding to each group of measurement resources according to the signaling and/or the assumption of the terminal, the measurement result, the RI and the PMI.

18. The method according to claim 17, wherein the calculating, by the terminal, the CQI according to the signaling and/or the assumption of the terminal, the measurement result, the RI and the PMI comprises at least one of:

calculating, by the terminal, a signal intensity and an interference intensity corresponding to each group of measurement resources according to the signaling and/or the assumption of the terminal, the measurement result, the RI and the PMI;
calculating, by the terminal, a signal to interference plus noise ratio corresponding to each group of measurement resources according to the signal intensity and interference intensity; and
obtaining, by the terminal, the CQI by mapping according to the signal to interference plus noise ratio.

19. The method according to claim 18, wherein the calculating, by the terminal, the signal intensity according to the signaling and/or the assumption of the terminal, the measurement result, the RI and the PMI comprises:
calculating, by the terminal, the signal intensity according to a channel measured on signal CSI-RS resources included in a signal part of each group of measurement resources and the RI and PMI corresponding to the signal CSI-RS resources.

20. The method according to claim 18, wherein the calculating, by the terminal, the interference intensity according to the signaling and/or the assumption of the terminal, the measurement result, the RI and the PMI comprises:

calculating, by the terminal, the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; and
summing, by the terminal, the interference intensities corresponding to the interference CSI-RS resources in the interference CSI-RS resource set, and obtaining the interference intensity corresponding to the group of measurement resources by adding the interference intensities measured on the IMR resources included in the interference part to the sum.

21. A device for feeding channel state information back, the device being applied to a terminal, comprising:

a measurement module, configured to perform measurement on one or more groups of measurement resources according to signaling transmitted from a base station and/or an assumption of the device, and obtain a measurement result corresponding to each group of measurement resources;

a calculation module, configured to calculate, according to the signaling and/or the assumption of the device and the measurement result, CSI on each group of measurement resources corresponding to DMRS ports and/or DMRS port groups; and

a feedback module, configured to feed part of or all calculated CSI back to the base station.

22. The device according to claim 21, wherein the CSI corresponding to each group of measurement resources comprises at least one of:

a channels quality indication, CQI;
a rank indicator, RI;
a pre-coding matrix indicator, PMI; and
a channel state information reference signal index, CRI.

23. The device according to claim 21, wherein measurement resource types on the each group of measurement resources comprise at least one or more of:

a cell specific reference signal, CRS;
a channel state information reference signal, CSI-RS; and
an interference measurement resource, IMR.

24. The device according to claim 21, wherein each group of measurement resources includes a signal part and an interference part, wherein the signal part comprises a set of signal CSI-RS resources, the interference part comprises a set of IMR resources and an interference CSI-RS resource set.

25. The device according to claim 24, wherein the interference CSI-RS resource set is empty, or the interference CSI-RS resource set comprises one set of interference CSI-RS resources, or the interference CSI-RS resource set comprises a plurality of sets of interference CSI-RS resources.

26. The device according to claim 24, wherein the set of signal CSI-RS resources and each set of interference CSI-RS resources in the each group of measurement resources correspond to same DMRS ports or DMRS port groups; or each set of signal CSI-RS resources and each set of interference CSI-RS resources in the each group of measurement resources respectively correspond to different DMRS ports or DMRS port groups.

27. The device according to claim 24, wherein in each group of measurement resources, the set of signal CSI-RS resources and one or more sets of interference CSI-RS resources in the interference CSI-RS resource set belong to a same CSI Process or belong to different CSI Processes.

28. The device according to claim 21, wherein a correspondence between signal CSI-RS resources in each group of measurement resources and the DMRS ports or DMRS port groups means that channel properties experienced by signals transmitted on the signal CSI-RS resources is same as channel properties experienced by signals transmitted via the DMRS ports or DMRS port groups.

29. The device according to claim 21, wherein each group of measurement resources comprises one or more sets of CSI-RS resources, and the device further comprises: a determination module, wherein the determination module is configured to determine, according to the signaling and/or the assumption of the device, at least one of:

a number of the measurement resources groups;
a signal part and an interference part in each group of measurement resources;
a CSI feedback format; and
a pre-coding matrix by which each set of CSI-RS resources is mapped on the DMRS ports or DMRS port groups.

30. The device according to claim 29, wherein the determination module is configured to determine the CSI feedback format according to the signaling and/or the assumption of the device in one of the following manners:

determining, according to an indication of the signaling, that a CQI based on single codeword mode is fed back when RI>1; and

determining, according to the indication of the signaling, that one or two CQIs based on dual codeword mode are fed back when RI>1.

**31.** The method according to claim 29, wherein each group of measurement resources comprises one or more sets of CSI-RS resources, the determination module is configured to determine the CSI feedback format according to the signaling and/or the assumption of the device in one of the following manners:

when the plurality of sets of CSI-RS resources belong to a same CSI Process, feeding one CRI and one CSI item back to the CSI Process according to an indication of the signaling; and
when the plurality of sets of CSI-RS resources belong to the same CSI Process, feeding two CRIs and one or two CSI items to the CSI Process according to the indication of the signaling.

**32.** The device according to claim 31, wherein when one CRI is fed back to the CSI Process according to the indication of the signaling, the one CRI corresponds to an index of a CSI-RS resource with a best signal quality in the CSI Process; when two CRIs are fed back to the CSI Process according to the indication of the signaling, a first CRI corresponds to the index of the CSI-RS resource with the best signal quality in the CSI Process, and a second CRI corresponds to an index of a CSI-RS resource with a second best signal quality in the CSI Process or an index of a CSI-RS resource which is a strongest interference to the CSI-RS resource with the best signal quality.

**33.** The device according to claim 31 or 32, comprises at least one of:
wherein when one CSI item is fed back to the CSI Process according to the indication of the signaling, the signal part of one group of measurement resources corresponding to the one CSI item is the CSI-RS resource corresponding to the first CRI, an interference CSI-RS resource set in the one group of measurement resources corresponding to the one CSI item is all CSI-RS resources in the CSI Process except the CSI-RS resource corresponding to the first CRI, or the CSI-RS resource corresponding to the second CRI, or is determined by the indication of the signaling and/or the assumption of the device, wherein the CSI-RS resource corresponding to the first CRI is the CSI-RS resource with the best signal quality in the CSI Process, the CSI-RS resource corresponding to the second CRI is the CSI-RS resource with the second best signal quality in the CSI Process or the CSI-RS resource which is the strongest interference to the CSI-RS resource with the best signal quality.

**34.** The device according to claim 31 or 32, wherein when two CSI items are fed back to the CSI Process according to the indication of the signaling, the signal part of one group of measurement resources corresponding to a first CSI item is the CSI-RS resource corresponding to the first CRI, an interference CSI-RS resource set in the one group of measurement resources corresponding to the first CSI item is all CSI-RS resources in the CSI Process except the CSI-RS resource corresponding to the first CRI item, or the CSI-RS resource corresponding to the second CRI, or is determined by the indication of the signaling and/or the assumption of the device; the signal part of one group of measurement resources corresponding to a second CSI item is the CSI-RS resource corresponding to the second CRI, the interference part of the one group of measurement resources corresponding to the second CSI item is determined by the indication of the signaling and/or the assumption of the device, wherein the CSI-RS resource corresponding to the first CRI item is the CSI-RS resource with the best signal quality in the CSI Process, the CSI-RS resource corresponding to the second CRI item is the CSI-RS resource with the second best signal quality in the CSI Process or the CSI-RS resource which is the strongest interference to the CSI-RS resource with the best signal quality.

**35.** The device according to claim 29, wherein the determination module is configured to determine the signal part and the interference part in each group of measurement resources according to the signaling and/or the assumption of the device in one of the following manners:

determining, according to the signaling, the set of signal CSI-RS resources included in the signal part and the set of IMR resources and the interference CSI-RS resource set included in the interference part;
determining, according to the signaling, the set of signal CSI-RS resources included in the signal part and the set of IMR resources included in the interference part, and determining, according to the assumption of the device, the interference CSI-RS resource set included in the interference part;
determining, according to the signaling, a binding relationship between the set of signal CSI-RS resources and the set of IMR resources and a correspondence between the set of signal CSI-RS resources and the interference CSI-RS resource set, and determining, according to the assumption of the device, the set of signal CSI-RS resources included in the signal part, and determining, according to the binding relationship and the correspondence, the interference CSI-RS resource set and the set of IMR resources included in the interference part; and

determining the set of IMR resources included in the interference part according to the signaling, and determining, according to the assumption of the device, the set of signal CSI-RS resources included in the signal part and the interference CSI-RS resource set included in the interference part.

36. The device according to claim 29, wherein the determination module is configured to determine the pre-coding matrix corresponding to each set of CSI-RS resources according to the signaling and/or the assumption of the device in one of the following manners:

determining, according to the signaling, the pre-coding matrix corresponding to each set of CSI-RS resources; selecting the pre-coding matrix corresponding to each set of CSI-RS resources from a selection range preset by the base station; determining, according to the assumption of the device, the pre-coding matrix corresponding to each set of CSI-RS resources; and assuming that each set of CSI-RS resources has no corresponding pre-coding matrix.

37. The device according to claim 21, wherein the calculation module comprises at least one of:

a first determination unit, configured to determine a RI corresponding to each group of measurement resources according to the signaling and/or the assumption of the device and the measurement result; a second determination unit, configured to determine a PMI corresponding to each group of measurement resources according to the signaling and/or the assumption of the device, the measurement result and the RI; and a calculation unit, configured to calculate a CQI corresponding to each group of measurement resources according to the signaling and/or the assumption of the device, the measurement result, the RI and the PMI.

38. The device according to claim 37, wherein the calculation unit comprises:

a first calculation subunit, configured to calculate a signal intensity and an interference intensity corresponding to each group of measurement resources according to the signaling and/or the assumption of the device, the measurement result, the RI and the PMI; a second calculation subunit, configured to calculate a signal to interference plus noise ratio corresponding to each group of measurement resources according to the signal intensity and interference intensity; and a mapping unit, configured to obtain the CQI by mapping according to the signal to interference plus noise ratio.

39. The device according to claim 38, wherein the first calculation subunit is configured to calculate the signal intensity according to a channel measured on signal CSI-RS resources included in a signal part of each group of measurement resources and the RI and PMI corresponding to the signal CSI-RS resources.

40. The device according to claim 38, wherein the first calculation subunit is configured to calculate the interference intensity corresponding to each interference CSI-RS resource according to a channel measured on each interference CSI-RS resource in the interference CSI-RS resource set included in an interference part of each group of measurement resources and the RI and PMI corresponding to the each interference CSI-RS resource; sum the interference intensities corresponding to the interference CSI-RS resources in the interference CSI-RS resource set; and obtain the interference intensity corresponding to the group of measurement resources by adding the interference intensities measured on the IMR resources included in the interference part to the sum.

41. A storage medium, **characterised in that** the storage medium comprises stored program codes, wherein when executed, the program codes controls a device in which the storage medium locates to execute the method for feeding channel state information back of any one of claims 1 to 20.

S12

A terminal performs measurement, according to signaling transmitted from a base station and/or its own assumption, on one or more groups of measurement resources, and obtains a measurement result corresponding to each group of measurement resources.

S14

The terminal calculates, according to the measurement result, and the signaling and/or its own assumption, channel state information (CSI) on DMRS ports and/ or DMRS port groups corresponding to each group of measurement resources.

S16

The terminal feeds back part of or all calculated CSI to the base station

FIG. 1

TP1

TP2

UE

FIG. 2

FIG. 3

FIG. 4

| | |
|---|---|
| ▨ | **CSI-RS of TP1** |
| ▧ | **CSI-RS of TP2** |
| ▭ | Zero-power CSI-RS |
| ▦ | **IMR1** |
| ▥ | **IMR2** |
| ▨ | **IMR3** |
| ⊠ | **CRS** |
| ⊞ | **DMRS** |

TP1           TP2

FIG. 5

FIG. 6

FIG. 7

FIG. 8

Measurement module 10

Calculation module 20

Feedback module 30

FIG. 9

Determination module 40

Measurement module 10

First determination unit 200

Second determination unit 202

Calculation unit 204

Calculation module 20

Feedback module 30

FIG. 10

# INTERNATIONAL SEARCH REPORT

International application No.

**PCT/CN2017/084105**

## A. CLASSIFICATION OF SUBJECT MATTER

H04L 1/00 (2006.01) i; H04L 5/00 (2006.01) i

According to International Patent Classification (IPC) or to both national classification and IPC

## B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT, CNKI, WPI, EPODOC, 3GPP: CRI, channel state information, feedback, measur+, results, DMRS, feed+, report, CQI, calculat+, PMI, IMR, interference, resource, port, group, CSI-RS, CRS, RI

## C. DOCUMENTS CONSIDERED TO BE RELEVANT

| Category* | Citation of document, with indication, where appropriate, of the relevant passages | Relevant to claim No. |
|---|---|---|
| Y | CN 103220066 A (HUAWEI TECHNOLOGIES CO., LTD.), 24 July 2013 (24.07.2013), description, paragraphs [0037]-[0071], [0122] and [0147] | 1-41 |
| Y | CN 102291212 A (CHINA ACADEMY OF TELECOMMUNICATIONS TECHNOLOGY), 21 December 2011 (21.12.2011), description, paragraphs [0008]-[0029] | 1-41 |
| Y | CN 103546262 A (HUAWEI TECHNOLOGIES CO., LTD.), 29 January 2014 (29.01.2014), description, paragraphs [0064]-[0128] | 1-41 |
| A | CN 103716116 A (ZTE CORP.), 09 April 2014 (09.04.2014), the whole document | 1-41 |
| A | CN 103580819 A (ZTE CORP.), 12 February 2014 (12.02.2014), the whole document | 1-41 |
| A | US 2014105049 A1 (SAMSUNG ELECTRONICS CO. , LTD.), 17 April 2014 (17.04.2014), the whole document | 1-41 |

☐ Further documents are listed in the continuation of Box C.      ☒ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 12 July 2017 (12.07.2017) | **27 July 2017 (27.07.2017)** |

| Name and mailing address of the ISA/CN:<br> State Intellectual Property Office of the P. R. China<br> No. 6, Xitucheng Road, Jimenqiao<br> Haidian District, Beijing 100088, China<br> Facsimile No.: (86-10) 62019451 | Authorized officer<br><br>**BI, Yachao**<br><br>Telephone No.: (86-10) **61648544** |

Form PCT/ISA/210 (second sheet) (July 2009)

## INTERNATIONAL SEARCH REPORT
Information on patent family members

| | International application No. |
|---|---|
| | **PCT/CN2017/084105** |

| Patent Documents referred in the Report | Publication Date | Patent Family | Publication Date |
|---|---|---|---|
| CN 103220066 A | 24 July 2013 | EP 2797353 A1 | 29 October 2014 |
| | | US 2014362793 A1 | 11 December 2014 |
| | | WO 2013107389 A1 | 25 July 2013 |
| CN 102291212 A | 21 December 2011 | WO 2013023542 A1 | 21 February 2013 |
| CN 103546262 A | 29 January 2014 | WO 2014008779 A1 | 16 January 2014 |
| CN 103716116 A | 09 April 2014 | JP 2015519804 | 09 July 2015 |
| | | US 2015098346 A1 | 09 April 2015 |
| | | WO 2014048189 A1 | 03 April 2014 |
| | | EP 2827518 A1 | 21 January 2015 |
| CN 103580819 A | 12 February 2014 | US 2015131563 A1 | 14 May 2015 |
| | | WO 2014019445 A1 | 06 February 2014 |
| US 2014105049 A1 | 17 April 2014 | WO 2014058282 A1 | 17 April 2014 |
| | | KR 20140047394 A | 22 April 2014 |

Form PCT/ISA/210 (patent family annex) (July 2009)